(19) Europäisches Patentamt
European Patent Office
Office européen des brevets

(11) **EP 4 293 872 B1**

(12) **EUROPEAN PATENT SPECIFICATION**

(45) Date of publication and mention of the grant of the patent:
**19.11.2025 Bulletin 2025/47**

(21) Application number: **21929643.1**

(22) Date of filing: **12.03.2021**

(51) International Patent Classification (IPC):
**H02J 50/12** (2016.01)   **H02J 50/10** (2016.01)
**H02J 50/60** (2016.01)   **H02J 50/80** (2016.01)

(52) Cooperative Patent Classification (CPC):
**H02J 50/60; B60L 53/12; B60L 53/124; H02J 50/80;** B60L 53/66; H02J 50/12; Y02T 90/14

(86) International application number:
**PCT/CN2021/080570**

(87) International publication number:
**WO 2022/188170 (15.09.2022 Gazette 2022/37)**

(54) **FOREIGN OBJECT DETECTION APPARATUS AND METHOD, AND WIRELESS CHARGING TRANSMITTER DEVICE**

FREMDKÖRPERDETEKTIONSVORRICHTUNG UND -VERFAHREN UND DRAHTLOSE LADESENDERVORRICHTUNG

APPAREIL ET PROCÉDÉ DE DÉTECTION D'OBJETS ÉTRANGERS, ET DISPOSITIF ÉMETTEUR DE CHARGE SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.12.2023 Bulletin 2023/51**

(73) Proprietor: **Huawei Technologies Co., Ltd.**
**Shenzhen, Guangdong 518129 (CN)**

(72) Inventors:
• **WANG, Shuyang**
  **Shenzhen, Guangdong 518129 (CN)**
• **CHEN, Shuangquan**
  **Shenzhen, Guangdong 518129 (CN)**

• **MAO, Yunhe**
  **Shenzhen, Guangdong 518129 (CN)**
• **LIU, Yanding**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(56) References cited:
CN-A- 103 852 631    CN-A- 105 790 324
CN-A- 106 972 651    CN-A- 108 375 797
CN-A- 109 038 850    CN-A- 109 038 850
CN-A- 110 843 561    JP-A- 2021 019 384
US-A1- 2018 166 928  US-A1- 2020 266 671

## Description

### TECHNICAL FIELD

This application relates to the wireless charging field, and in particular, to a foreign object detection apparatus and method, and a wireless charging transmit-end device.

### BACKGROUND

With continuous development of wireless charging technologies, a magnetically coupled wireless energy transmission technology has become a hot research direction of wireless charging technologies because the magnetically coupled wireless energy transmission technology facilitates implementation of long-distance and high-power energy transmission. A magnetically coupled wireless charging system usually includes two separate devices: a wireless charging transmit-end device and a wireless charging receive-end device. The wireless charging transmit-end device includes a power transmission apparatus, and the wireless charging receive-end device includes a power receiving apparatus. The power transmission apparatus is connected to a power source, and the power receiving apparatus is connected to a to-be-charged device (such as an electric vehicle or a mobile phone). The power transmission apparatus and the power receiving apparatus transfer energy through electromagnetic induction between a transmit coil and a receive coil, to implement wireless charging. There is a specific spatial gap between the power transmission apparatus and the power receiving apparatus. Therefore, during charging of the to-be-charged device, if a foreign object (especially a metal foreign object) such as a coin or tinfoil exists in the spatial gap, the foreign object causes eddy effect under the action of a high-frequency electromagnetic field. Consequently, temperature of the foreign object sharply increases, and a danger such as a fire may occur. Therefore, when the magnetically coupled wireless charging system charges the to-be-charged device, foreign object detection needs to be performed, to ensure safety of the wireless charging system and the to-be-charged device.

In the conventional technology, whether a foreign object exists is usually determined based on a change of an electrical parameter caused by a change of a physical characteristic of one or more foreign object detection coils disposed between the power transmission apparatus and the power receiving apparatus. For example, a value of a current or a voltage of the foreign object detection coil is detected by using an analog circuit, and whether a foreign object exists in the spatial gap is directly determined based on the current or the voltage of the foreign object detection coil. For another example, a current parameter or a voltage parameter detected by the analog circuit may alternatively be transmitted to a controller, and the controller processes the current parameter or the voltage parameter to obtain a corresponding phase angle or frequency parameter, and then determine, based on the phase angle or the frequency parameter, whether a foreign object exists in the spatial gap. However, a conventional foreign object detection solution usually has a problem of low detection precision or high system complexity. As a result, reliability and applicability of the conventional foreign object detection solution are low. Therefore, a foreign object detection solution that is easy to implement and has high detection precision urgently needs to be proposed. US2018/166928A1 discloses a wireless power transfer equipment comprising a wireless power transfer coil, a foreign object detection coil array overlapping the wireless power transfer coil, a foreign object detection circuitry that is coupled to the foreign object detection coil array and that is configured to produce in-phase and quadrature signals indicative of whether a foreign object is overlapping the foreign object detection coil array, and a control circuitry configured to receive the in-phase and quadrature signals from the foreign object detection circuitry. CN109038850A discloses a method for detecting metal foreign objects in a wireless charging system.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. To resolve the foregoing problems, embodiments of his application provides a foreign object detection apparatus and method, and a wireless charging transmit-end device. With the foreign object detection apparatus and method provided in this application, foreign object detection can be performed easily and accurately, costs of foreign object detection can be reduced, and precision of foreign object detection can be improved.

According to a first aspect, an embodiment of this application provides a foreign object detection apparatus. The foreign object detection apparatus includes a controller, a first resonant network, a signal coupler, and a phase difference detector. The signal coupler may be configured to obtain a resonance current signal corresponding to the first resonant network when the first resonant network operates normally under the action of an excitation signal, couple a preset carrier signal to the resonance current signal to obtain a coupled current signal, and transmit the coupled current signal to the phase difference detector. Herein, a frequency of the preset carrier signal is the same as a frequency of the excitation signal, and there is a 90-degree phase difference between the preset carrier signal and the excitation signal. The phase difference detector may be configured to extract a low-frequency signal component from the coupled current signal, determine a phase difference signal based on the low-frequency signal component, and transmit the phase difference signal to the controller. Herein, the low-frequency signal component is a signal component with a frequency less than or equal to a first preset frequency in the coupled current signal, and an amplitude of the phase difference signal correspondingly indicates a phase difference between the excitation signal and the resonance current signal. The controller may be configured to determine, based on the amplitude of the phase difference signal, whether a foreign object exists in a detection area corresponding to the first resonant network.

In the foregoing implementation, the foreign object detection apparatus may directly detect, by using the signal coupler and the phase difference detector, the phase difference signal that can indicate the phase difference between the excitation signal of the first resonant network and the resonance current signal corresponding to the excitation signal of the first resonant network, and perform, by using the controller, simple processing on the phase difference signal to determine whether a foreign object exists in the detection area corresponding to the first resonant network. The foreign object detection apparatus provided in this application directly detects, by using the signal coupler and the phase difference detector, the phase difference signal that can indicate the phase difference between the excitation signal and the resonance current signal, and then performs simple processing on the phase difference signal to implement foreign object detection. This reduces overall system complexity and costs compared with a conventional manner in which a controller processes a current parameter or a voltage parameter detected by an analog circuit to obtain a phase angle or a frequency parameter, and then performs foreign object detection based on the phase angle or the frequency parameter. In addition, the foreign object detection apparatus provided in this application determines, by using the phase difference signal, whether a foreign object exists. This can avoid the following problem in a manner in which foreign object detection is directly performed based on a measured current parameter or voltage parameter: Detection precision is low because the current parameter or the voltage parameter is subject to interference from primary power. Therefore, with the foreign object detection apparatus provided in this application, costs of foreign object detection can be reduced, and precision and reliability of foreign object detection can be improved.

With reference to the first aspect, in a feasible implementation, the foreign object detection apparatus further includes a current detector. When the first resonant network operates normally under the action of the excitation signal, the current detector may be configured to detect a current output by the first resonant network to obtain the resonance current signal, and send the resonance current signal to the signal coupler.

With reference to the first aspect, the signal coupler includes a first reverser and a signal selector. The first reverser is configured to perform phase shift on the resonance current signal to obtain a reverse resonance current signal. Herein, a phase difference between the reverse resonance current signal and the resonance current signal is 180 degrees. The signal selector is configured to select, based on a value of a signal amplitude of the preset carrier signal, the resonance current signal or the reverse resonance current signal as the coupled current signal to be output.

In the foregoing implementation, the coupled current signal is obtained through coupling by the first reverser and the signal selector that have simple structures and that are widely used. This can reduce costs of the foreign object detection apparatus, and can also simplify a structure of the foreign object detection apparatus and improve stability and robustness of the foreign object detection apparatus.

With reference to the first aspect, in a feasible implementation, the signal selector includes a first switching transistor, a second switching transistor, and a second reverser. The preset carrier signal is input to a first end of the first switching transistor through the second reverser. The preset carrier signal is also input to a first end of the second switching transistor. The resonance current signal is input to a second end of the first switching transistor. The reverse resonance current signal is input to a second end of the second switching transistor. A third end of the first switching transistor is connected to a third end of the second switching transistor and serves as an output end of the signal selector. The preset carrier signal is configured to control, through the second reverser, the first switching transistor to be turned on, and is configured to control the second switching transistor to be turned off, so that the resonance current signal is output as the coupled current signal. Alternatively, the preset carrier signal is configured to control the second switching transistor to be turned on, and is configured to control the first switching transistor to be turned off, so that the reverse resonance current signal is output as the coupled current signal.

In the foregoing implementation, the signal selector is implemented by using the switching transistors and the reverser that have stable structures and that are cost-effective. This can facilitate integration of the signal selector, and can also further reduce implementation costs of the foreign object detection apparatus.

With reference to the first aspect, in a feasible implementation, the excitation signal is a sine signal, the preset carrier signal is a square wave signal, and a phase difference between the excitation signal and the preset carrier signal is 90 degrees.

With reference to the first aspect, in a feasible implementation, the signal coupler includes a multiplier or an analog multiplication circuit. The multiplier or the analog multiplication circuit is configured to multiply the preset carrier signal by the resonance current signal to obtain the coupled current signal.

In the foregoing implementation, signal coupling is performed on the preset carrier signal and the resonance current signal by using the multiplier or the analog multiplication circuit. The method is simple and easy to implement, and efficiency of foreign object detection can be improved.

With reference to the first aspect, in a feasible implementation, the excitation signal and the preset carrier signal are sine signals.

With reference to the first aspect, in a feasible implementation, the controller may determine an amplitude of the phase difference signal. If the controller determines that the amplitude of the phase difference signal is greater than or equal to a first preset amplitude or is less than or equal to a second preset amplitude, the controller determines that a foreign object exists in the detection area corresponding to the first resonant network, where the first preset amplitude is greater than the second preset amplitude. If the controller determines that the amplitude of the phase difference signal is less than the first preset amplitude and greater than the second preset amplitude, the controller determines that no foreign object exists in the detection area corresponding to the first resonant network.

In the foregoing implementation, foreign object detection is directly performed through comparison between the amplitude of the phase difference signal and values of the first preset amplitude and the second preset amplitude. The method is simple and easy to implement, a requirement for a data processing capability of the controller can be reduced, and costs of foreign object detection can be reduced.

With reference to the first aspect, in a feasible implementation, the foreign object detection apparatus further includes an amplitude detector. The amplitude detector may be configured to detect a target signal amplitude of the resonance current signal. The controller may be configured to determine, based on the target signal amplitude and an amplitude of the phase difference signal, whether a foreign object exists in the detection area corresponding to the first resonant network.

With reference to the first aspect, in a feasible implementation, the controller may be configured to: determine an amplitude of the phase difference signal; and if it is determined that a quotient of the amplitude of the phase difference signal and the target signal amplitude is greater than or equal to a first preset threshold or is less than or equal to a second preset threshold, determine that a foreign object exists in the detection area corresponding to the first resonant network; or if it is determined that a quotient of the amplitude of the phase difference signal and the target signal amplitude is greater than the second preset threshold and less than the first preset threshold, determine that no foreign object exists in the detection area corresponding to the first resonant network.

In the foregoing implementation, the quotient of the amplitude of the phase difference signal and the target signal amplitude is related only to the phase difference between the excitation signal and the resonance current signal. Therefore, the controller determines, based on the quotient of the amplitude of the phase difference signal and the target signal amplitude, whether a foreign object exists in the detection area. This can avoid a case that whether a foreign object exists in the detection area cannot be accurately determined directly based on the amplitude of the phase difference signal due to a change of an amplitude of the resonance current signal, and can improve detection precision of the foreign object detection apparatus.

With reference to the first aspect, in a feasible implementation, the controller may be configured to: determine an amplitude of the phase difference signal; and if it is determined that the target signal amplitude is greater than or equal to a third preset amplitude, and a quotient of the amplitude of the phase difference signal and the target signal amplitude is greater than or equal to a first preset threshold or is less than or equal to a second preset threshold, determine that a foreign object exists in the detection area corresponding to the first resonant network; or if it is determined that the target signal amplitude is less than the third preset amplitude, or it is determined that a quotient of the amplitude of the phase difference signal and the target signal amplitude is greater than the second preset threshold and less than the first preset threshold, determine that no foreign object exists in the detection area corresponding to the first resonant network.

In the foregoing implementation, a value of the amplitude of the phase difference signal is further related to the target signal amplitude of the resonance current signal, and a value of the target signal amplitude is further related to a size of an object (the object may be a foreign object, or may be a non-foreign object, for example, a structure such as a vehicle body or a chassis of an electric vehicle) in the detection area. Therefore, in the foregoing implementation, determining is performed based on both the value of the target signal amplitude and a value of the quotient. This can avoid a case that a non-foreign object structure (for example, a structure such as a vehicle body or a chassis of an electric vehicle) is recognized as a foreign object, and can improve detection precision of the foreign object detection apparatus.

With reference to the first aspect, in a feasible implementation, the foreign object detection apparatus further includes a signal generator, and the signal generator may be configured to generate the preset carrier signal and the excitation signal according to a signal control instruction sent by the controller. Herein, frequencies of the preset carrier signal and the excitation signal are indicated by the signal control instruction.

With reference to the first aspect, in a feasible implementation, the foreign object detection apparatus further includes a second resonant network and a switching module, and the second resonant network and the first resonant network are separately connected to the switching module. The switching module may be configured to determine, based on a resonant network selection signal that comes from the controller, whether the excitation signal generated by the signal generator is to be transmitted to the first resonant network or the second resonant network.

According to a second aspect, an embodiment of this application provides a foreign object detection method. The foreign object detection method is applied to a foreign object detection apparatus, and the foreign object detection apparatus includes a first resonant network, a signal coupler, a phase difference detector, and a controller. The method includes: The signal coupler couples a resonance current signal corresponding to the first resonant network when the first resonant network operates normally under the action of an excitation signal to a preset carrier signal to obtain a coupled current signal, wherein a frequency of the preset carrier signal is the same as a frequency of the excitation signal, and there is a 90-degree phase difference between the preset carrier signal and the excitation signal. The phase difference detector extracts a low-frequency signal component from the coupled current signal, and determines a phase difference signal based on the low-frequency signal component, where the low-frequency signal component is a signal component with a frequency less than or equal to a preset frequency in the modulated current signal, and a signal amplitude of the phase difference signal indicates a phase difference between the excitation signal and the resonance current signal. The controller determines, based on the phase difference signal, whether a foreign object exists in a detection area corresponding to the first resonant network.

With reference to the second aspect, in a feasible implementation, the foreign object detection apparatus further includes a current detector. The method further includes: When the first resonant network operates normally under the action of the excitation signal, the current detector detects a current output by the first resonant network to obtain the resonance current signal.

With reference to the second aspect, the signal coupler includes a first reverser and a signal selector. The first reverser performs phase shift on the resonance current signal to obtain a reverse resonance current signal, where a phase difference between the reverse resonance current signal and the resonance current signal is 180 degrees. The signal selector selects, based on a value of a signal amplitude of the preset carrier signal, the resonance current signal or the reverse resonance current signal as the coupled current signal to be output.

With reference to the second aspect, in a feasible implementation, the signal selector includes a first switching transistor, a second switching transistor, and a second reverser. The preset carrier signal is input to a first end of the first switching transistor through the second reverser. The preset carrier signal is also input to a first end of the second switching transistor. The resonance current signal is input to a second end of the first switching transistor. The reverse resonance current signal is input to a second end of the second switching transistor. A third end of the first switching transistor is connected to a third end of the second switching transistor and serves as an output end of the signal selector. A preset carrier signal that is input to a first end of the first switching transistor and that flows through the second reverser controls the first switching transistor to be turned on, and a preset carrier signal that is input to a first end of the second switching transistor controls the second switching transistor to be turned off, so that the resonance current signal is output as the coupled current signal. Alternatively, a preset carrier signal that is input to a first end of the second switching transistor controls the second switching transistor to be turned on, and a preset carrier signal that is input a first end of the first switching transistor and that flows through the second reverser controls the first switching transistor to be turned off, so that the reverse resonance current signal is output as the coupled current signal.

With reference to the second aspect, in a feasible implementation, the excitation signal is a sine signal, the preset carrier signal is a square wave signal, and a phase difference between the excitation signal and the preset carrier signal is 90 degrees.

With reference to the second aspect, in a feasible implementation, the signal coupler includes a multiplier or an analog multiplication circuit. The multiplier or the analog multiplication circuit multiplies the preset carrier signal by the resonance current signal to obtain the coupled current signal.

With reference to the second aspect, in a feasible implementation, the excitation signal and the preset carrier signal are sine signals.

With reference to the second aspect, in a feasible implementation, the controller may determine an amplitude of the phase difference signal. If the controller determines that the amplitude of the phase difference signal is greater than or equal to a first preset amplitude or is less than or equal to a second preset amplitude, the controller determines that a foreign object exists in the detection area corresponding to the first resonant network, where the first preset amplitude is greater than the second preset amplitude. If the controller determines that the amplitude of the phase difference signal is less than the first preset amplitude and greater than the second preset amplitude, the controller determines that no foreign object exists in the detection area corresponding to the first resonant network.

With reference to the second aspect, in a feasible implementation, the foreign object detection apparatus further includes an amplitude detector. The amplitude detector may detect a target signal amplitude of the resonance current signal.

With reference to the second aspect, in a feasible implementation, the controller may determine an amplitude of the phase difference signal. If the controller determines that a quotient of the amplitude of the phase difference signal and the target signal amplitude is greater than or equal to a first preset threshold or is less than or equal to a second preset threshold, the controller determines that a foreign object exists in the detection area corresponding to the first resonant network. If the controller determines that a quotient of the amplitude of the phase difference signal and the target signal amplitude is greater than the second preset threshold and less than the first preset threshold, the controller determines that no foreign object exists in the detection area corresponding to the first resonant network.

With reference to the second aspect, in a feasible implementation, the controller may determine an amplitude of the phase difference signal. If the controller determines that the target signal amplitude is greater than or equal to a third preset amplitude, and a quotient of the amplitude of the phase difference signal and the target signal amplitude is greater than or equal to a first preset threshold or is less than or equal to a second preset threshold, the controller determines that a foreign object exists in the detection area corresponding to the first resonant network. If the controller determines that the target signal amplitude is less than the third preset amplitude, or it is determined that a quotient of the amplitude of the phase difference signal and the target signal peak is greater than the second preset threshold and less than the first preset threshold, the controller determines that no foreign object exists in the detection area corresponding to the first resonant network.

With reference to the second aspect, in a feasible implementation, the foreign object detection apparatus further includes a signal generator. The controller may generate a signal control instruction and send the signal control instruction to the signal generator. The signal generator may generate the preset carrier signal and the excitation signal according to the signal control instruction. Herein, frequencies of the preset carrier signal and the excitation signal are indicated by the signal control instruction.

With reference to the second aspect, in a feasible implementation, the foreign object detection apparatus further includes a second resonant network and a switching module. The second resonant network and the first resonant network are separately connected to the switching module. The controller may generate a resonant network selection signal and send the resonant network selection signal to the switching module. The switching module may determine, based on the resonant network selection signal, whether the excitation signal generated by the signal generator is to be transmitted to the first resonant network or the second resonant network.

According to a third aspect, an embodiment of this application provides a wireless charging transmit-end device. The wireless charging transmit-end device includes a power transmission apparatus and the foreign object detection apparatus provided in the first aspect. Herein, the foreign object detection apparatus may be disposed on a side, facing a wireless charging power receiving apparatus, of the power transmission apparatus. The power receiving apparatus is included in a wireless charging receive-end device corresponding to the wireless charging transmit-end device. It should be noted that, during specific implementation, the power transmission apparatus may include a power transmit coil, the power receiving apparatus may include a power receive coil, and the foreign object detection apparatus may be disposed on a side, facing the power receive coil, of the power transmit coil.

According to a first example that is not encompassed by the claims but useful for understanding the invention, an embodiment of this application provides a wireless charging receive-end device. The wireless charging receive-end device includes a power receiving apparatus and the foreign object detection apparatus provided in the first aspect. Herein, the foreign object detection apparatus may be disposed on a side, facing a wireless charging power transmission apparatus, of the power receiving apparatus. The power transmission apparatus may be included in a wireless charging transmit-end device that corresponds to the wireless charging receive-end device. It should be noted that, during specific implementation, the power transmission apparatus may include a power transmit coil, the power receiving apparatus may include a power receive coil, and the foreign object detection apparatus may be disposed on a side, facing the power transmit coil, of the power receive coil.

## BRIEF DESCRIPTION OF DRAWINGS

FIG. 1 is a schematic diagram of a structure of a wireless charging system according to an embodiment of this application;
FIG. 2 is a schematic diagram of another structure of a wireless charging system according to an embodiment of this application;
FIG. 3 is a schematic diagram of a structure of a foreign object detection apparatus according to an embodiment of this application;
FIG. 4 is a schematic diagram of another structure of a foreign object detection apparatus according to an embodiment of this application;
FIG. 5 is a schematic diagram of another structure of a foreign object detection apparatus according to an embodiment of this application;
FIG. 6 is a schematic diagram of a waveform change according to an embodiment of this application;
FIG. 7 is a schematic diagram of signal coupling according to an embodiment of this application;
FIG. 8 is another schematic diagram of signal coupling according to an embodiment of this application;

FIG. 9 is a schematic diagram of another structure of a foreign object detection apparatus according to an embodiment of this application;

FIG. 10 is a schematic diagram of a structure of a signal coupler according to an embodiment of this application;

FIG. 11 is a schematic diagram of another structure of a foreign object detection apparatus according to an embodiment of this application;

FIG. 12 is a schematic diagram of another structure of a foreign object detection apparatus according to an embodiment of this application;

FIG. 13 is a schematic diagram of another structure of a foreign object detection apparatus according to an embodiment of this application;

FIG. 14 is a schematic diagram of another structure of a foreign object detection apparatus according to an embodiment of this application;

FIG. 15 is a schematic diagram of another structure of a foreign object detection apparatus according to an embodiment of this application;

FIG. 16 is a schematic flowchart of a foreign object detection method according to an embodiment of this application;

FIG. 17 is a schematic diagram of a structure of another wireless charging system according to an embodiment of this application; and

FIG. 18 is a schematic diagram of a structure of another wireless charging system according to an embodiment of this application.

## DESCRIPTION OF EMBODIMENTS

The following clearly describes technical solutions in embodiments of this application with reference to a plurality of accompanying drawings provided in embodiments of this application.

A foreign object detection apparatus and a foreign object detection method provided in this application are applicable to an electromagnetically coupled wireless charging system. The electromagnetically coupled wireless charging system may be a wireless charging system used in an electric vehicle, or may be a wireless charging system used in a mobile device such as a tablet computer or a mobile phone, or may be a wireless charging system used in a smart robot, an electric pallet truck, or the like. This may be determined based on an actual application scenario, and is not limited herein. For ease of description, in this application, a wireless charging system used in an electric vehicle is used as an example to describe the foreign object detection apparatus provided in this application and the foreign object detection method based on the foreign object detection apparatus.

With aggravation of energy shortage and environmental pollution in modern society, electric vehicles, as new energy vehicles, have attracted wide attention as soon as they are launched. The electric vehicle is a vehicle that is powered by a vehicle-mounted power supply, that meets various requirements of road traffic and safety regulations, and in which a motor is used to drive vehicle wheels to move. Battery charging methods for the electric vehicles usually include contact charging and wireless charging. The contact charging means that metal of a plug is in contact with metal of a socket to conduct electricity, and the wireless charging means that a coupled electromagnetic field serves as a medium for transferring electric energy. Compared with the contact charging, the wireless charging has advantages such as ease of use, no spark or electric shock hazard, no mechanical abrasion, adaptability to a variety of harsh environments and weather conditions, and case of implementing automatic charging and mobile charging, and may become a mainstream charging mode for the electric vehicles in the future. A wireless charging system used in an electric vehicle is used below as an example to describe an example architecture of a wireless charging system to which the foreign object detection apparatus provided in this application is applicable.

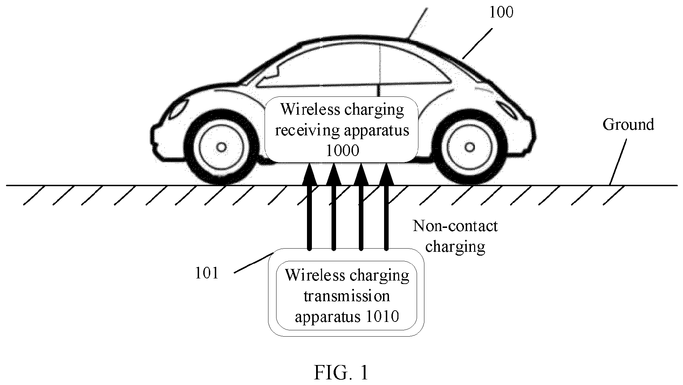

FIG. 1 is a schematic diagram of a structure of a wireless charging system according to an embodiment of this application. As shown in FIG. 1, the wireless charging system may include at least an electric vehicle 100 and a wireless charging station 101. The electric vehicle 100 may be provided with a wireless charging receiving apparatus 1000, and the wireless charging station 101 may be provided with a wireless charging transmission apparatus 1010. Currently, a process of charging the electric vehicle by the wireless charging system is jointly completed by the wireless charging receiving apparatus 1000 and the wireless charging transmission apparatus 1010. Herein, the wireless charging receiving apparatus 1000 is a power receiving apparatus in the wireless charging system, and the wireless charging transmission apparatus 1010 is a power transmission apparatus in the wireless charging system.

In some feasible implementations, the wireless charging station 101 may be a stationary wireless charging station, a stationary wireless charging parking space, a wireless charging road, or the like. This is not limited in this application. The wireless charging receiving apparatus 1000 may be integrated at the bottom of the electric vehicle 100. When the electric vehicle 100 enters a wireless charging range of the wireless charging transmission apparatus 1010, the electric vehicle 100 may be charged through wireless charging. The wireless charging receiving apparatus 1000 may include components such as a power receive coil and a rectifier circuit. The power receive coil and the rectifier circuit may be integrated or separated. When the power receive coil and the rectifier circuit are separated, the rectifier circuit is usually placed in the vehicle. FIG. 1 shows a case in which the power receive coil and the rectifier circuit are integrated. The wireless charging transmission apparatus 1010 may include a power transmit coil and an inverter circuit. The power transmit coil and the inverter circuit may also be integrated or separated. FIG. 1 shows a case in which the power transmit coil and the inverter circuit are integrated.

In some feasible implementations, non-contact charging may be that the wireless charging receiving apparatus 1000 and the wireless charging transmission apparatus 1010 wirelessly transmit energy through magnetic field coupling, which may be electromagnetic induction, magnetic resonance, or the like. This is not limited in this application. In actual application, the electric vehicle 100 and the wireless charging station 101 may alternatively perform bidirectional charging. To be specific, the wireless charging station 101 may charge the electric vehicle 100, and the electric vehicle 100 may also reversely charge the wireless charging station.

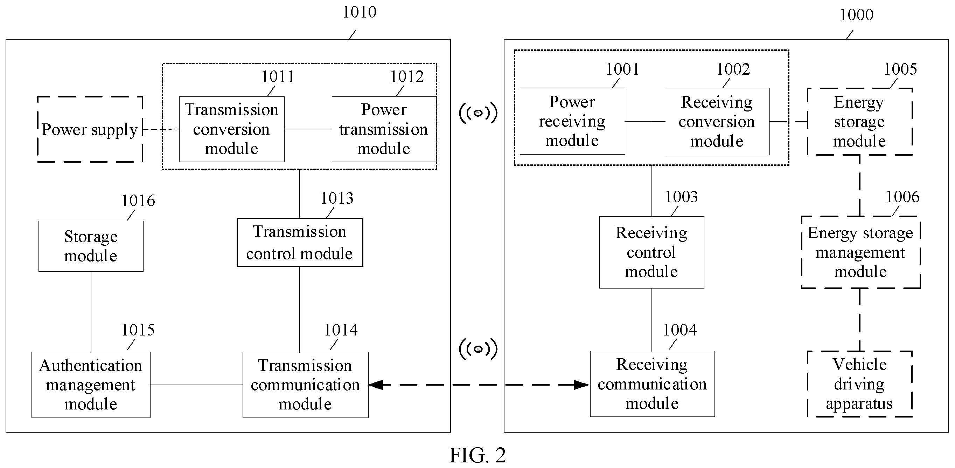

With reference to FIG. 2, the following describes example structures of the wireless charging transmission apparatus 1010 and the wireless charging receiving apparatus 1000 in the wireless charging system shown in FIG. 1. FIG. 2 is a schematic diagram of another structure of a wireless charging system according to an embodiment of this application. As shown in FIG. 2, the wireless charging system includes the wireless charging receiving apparatus 1000 and the wireless charging transmission apparatus 1010 shown in FIG. 1.

During specific implementation, the wireless charging transmission apparatus 1010 may include a transmission conversion module 1011, a power transmission module 1012, a transmission control module 1013 connected to the transmission conversion module 1011 and the power transmission module 1012, a transmission communication module 1014 connected to the transmission control module 1013, an authentication management module 1015 connected to the transmission communication module 1014, a storage module 1016 connected to the authentication management module 1015, and the like. Herein, it can be understood that the power transmission module 1012 may be a power transmit coil (or referred to as a transmit coil).

Optionally, the transmission conversion module 1011 may be connected to a power supply of the wireless charging transmission apparatus 1010, and is configured to convert an alternating current or a direct current output by the power supply into a high-frequency alternating current. Herein, when a current output by the power supply is an alternating current, the transmission conversion module 1011 includes a power factor correction unit, an inverter unit (or referred to as an inverter circuit), and a transmit-end compensation network; or when a current output by the power supply is a direct current, the transmission conversion module 1011 may include an inverter unit and a transmit-end compensation network. In actual use, the power factor correction unit can ensure that an input current phase of the wireless charging system is consistent with a voltage phase of a power grid, to reduce harmonic content of the system and increase a power factor value, so as to reduce pollution caused by the wireless charging system to the power grid and improve reliability. The power factor correction unit may be further configured to increase or decrease an output voltage of the power factor correction unit according to a requirement of a next-stage circuit in an actual application scenario. Optionally, when a variable range of the output voltage of the power factor correction unit does not meet the requirement of the actual application scenario, a direct current conversion unit may be further added to the transmission conversion module 1011, and the direct current conversion unit may be configured to adjust a voltage output to the next-stage circuit, so that a variable range of the voltage output to the next-stage circuit meets the requirement of the actual application scenario. The inverter unit may convert the output voltage of the power factor correction unit into a high-frequency alternating-current voltage, and apply the high-frequency alternating-current voltage to the power transmission module through the transmit-end compensation network. The high-frequency alternating-current voltage can greatly improve transmission efficiency and a transmission distance of the power transmission module. Herein, it should be noted that the power supply of the wireless charging transmission apparatus 1010 may be a power supply disposed in the wireless charging transmission apparatus 1010, or may be an external power supply connected to the wireless charging transmission apparatus 1010. This is not limited in this application.

The power transmission module 1012 may be configured to transmit, through a magnetic field, a high-frequency alternating current provided by the transmission conversion module 1011.

The transmission control module 1013 may be configured to control a voltage, a current, and a frequency conversion parameter of the transmission conversion module 1011, and control a voltage, a current, and the like of a high-frequency alternating current in the power transmission module 1012 according to a transmit power requirement of wireless charging in an actual application scenario.

The transmission communication module 1014 may be configured to perform wireless communication between the wireless charging transmission apparatus 1010 and the wireless charging receiving apparatus 1000, including communication transmission of information such as power control information, failure protection information, on/off information, and interactive authentication information. The wireless charging transmission apparatus 1010 may receive attribute information, a charging request, and interactive authentication information of the electric vehicle that are sent by the wireless charging receiving apparatus 1000. In addition, the wireless charging transmission apparatus 1010 may further send wireless charging transmission control information, interactive authentication information, historical wireless charging data information, and the like to the wireless charging receiving apparatus 1000. A mode of the wireless communication may include but is not limited to any one or a combination of Bluetooth (Bluetooth), wireless fidelity (Wi-Fi), the ZigBee (ZigBee) protocol, a radio frequency identification (RFID) technology, a long range (Lora) wireless technology, and a near field communication (NFC) technology. Optionally, the transmission communication module 1014 may further communicate with an intelligent terminal of a user who owns the electric vehicle, and the user implements remote authentication and user information transmission through a communication function.

The authentication management module 1015 may be configured to perform interactive authentication and permission management between the wireless charging transmission apparatus 1010 and the electric vehicle in the wireless charging system.

The storage module 1016 may be configured to store charging process data, interactive authentication data (for example, interactive authentication information), and permission management data (for example, permission management information) of the wireless charging transmission apparatus 1010. The interactive authentication data and the permission management data may be set in a factory, or may be set by the user. This may be determined based on an actual application scenario, and is not limited herein.

During specific implementation, the wireless charging receiving apparatus 1000 may include a power receiving module 1001, a receiving conversion module 1002, a receiving control module 1003 connected to the power receiving module 1001 and the receiving conversion module 1002, and a receiving communication module 1004 connected to the receiving control module 1003. It can be understood that the power receiving module 1001 herein may be a power receive coil (or referred to as a receive coil). Optionally, the receiving conversion module 1002 may be connected to an energy storage module 1005 of the wireless charging receiving apparatus 1000, and transmit received energy to the energy storage module 1005. The energy storage module 1005 may be connected to an energy storage management module 1006, and the energy storage management module 1006 may be connected to a vehicle driving apparatus of the electric vehicle, and is configured to drive the electric vehicle. Herein, it should be noted that the energy storage management module 1006 and the energy storage module 1005 may be located in the wireless charging receiving apparatus 1000, or may be located outside the wireless charging receiving apparatus 1000. This is not limited in this application.

The power receiving module 1001 may be configured to receive active power and reactive power that are transmitted by the wireless charging transmission apparatus 1010. Herein, the power receiving module 1001 may be a power receive coil. The power receive coil and the power transmit coil (namely, the power transmission module 1012) in the wireless charging transmission apparatus 1010 transfer energy through electromagnetic induction. A compensation network at a power transmit end and a compensation network at a power receive end in the wireless charging system provided in this application may be selectively combined in any manner. Common combinations of compensation network structures include an S-S (series-series) type, a P-P (parallel-parallel) type, an S-P (series-parallel) type, a P-S (parallel-series) type, an LCL-LCL (inductor capacitor inductor-inductor capacitor inductor) type, an LCL-P (inductor capacitor inductor-parallel) type, an LCC-LCC (inductor capacitor capacitor-inductor capacitor capacitor) type, and the like. This may be determined according to a requirement of an actual application scenario, and is not limited in this application.

The receiving conversion module 1002 may be configured to convert a high-frequency resonance current and a high-frequency resonance voltage that are received by the power receiving module 1001 into a direct-current voltage and a direct current that are required for charging the energy storage module 1005. The receiving conversion module 1002 usually includes a receive-end compensation network and a rectifier unit (or referred to as a rectifier circuit). The rectifier unit converts the high-frequency resonance current and the high-frequency resonance voltage that are received by the power receiving module 1001 into the direct-current voltage and the direct current. If a voltage output by the rectifier unit cannot meet a requirement of the energy storage module, a direct current conversion unit may be further added to the receiving conversion module 1002 for voltage adjustment.

The receiving control module 1003 may be configured to control adjustment of a voltage, a current, and a frequency conversion parameter of the receiving conversion module 1002 according to a receive power requirement of wireless charging in an actual application scenario.

The receiving communication module 1004 may be configured to perform wireless communication between the wireless charging receiving apparatus 1000 and the wireless charging transmission apparatus 1010, including communication transmission of information such as power control information, failure protection information, on/off information, and interactive authentication information. Functions of the receiving communication module 1004 correspond to the functions of the transmission communication module 1014 in the wireless charging transmission apparatus 1010, and details are not described herein again.

In the wireless charging system shown in FIG. 1 or FIG. 2, there is a specific spatial gap between the wireless charging transmission apparatus 1010 and the wireless charging receiving apparatus 1000. Therefore, in a process of charging the electric vehicle by the wireless charging system, if a foreign object such as a coin or tinfoil exists in the spatial gap, the foreign object causes eddy effect under the action of a high-frequency electromagnetic field. Consequently, temperature of the foreign object sharply increases, and a danger such as a fire may occur. Therefore, foreign object detection needs to be performed, to ensure safety of the wireless charging system and a to-be-charged device.

In the conventional technology, whether a foreign object exists is usually determined based on a change of an electrical parameter caused by a change of a physical characteristic of one or more foreign object detection coils disposed between the power transmission apparatus and the power receiving apparatus. For example, a value of a current or a voltage of the foreign object detection coil is detected by using an analog circuit, and whether a foreign object exists in the spatial gap is directly determined based on the current or the voltage of the foreign object detection coil. For another example, a current parameter or a voltage parameter detected by the analog circuit may alternatively be transmitted to a controller, and the controller processes the current parameter or the voltage parameter to obtain a corresponding phase angle or frequency parameter, and then determine, based on the phase angle or the frequency parameter, whether a foreign object exists in the spatial gap. However, a conventional foreign object detection solution usually has a problem of low detection precision or high system complexity. As a result, reliability and applicability of the conventional foreign object detection solution are low.

Therefore, a technical issue to be addresses in this application is how to conveniently and accurately implement foreign object detection.

**Embodiment 1**

To resolve the foregoing problems, an embodiment of this application provides a foreign object detection apparatus. The foreign object detection apparatus is applicable to the wireless charging system shown in FIG. 1 or FIG. 2. The foreign object detection apparatus may be configured to detect and determine whether a foreign object exists in a spatial gap between the wireless charging receiving apparatus 1000 and the wireless charging transmission apparatus 1010 in the wireless charging system shown in FIG. 1 or FIG. 2.

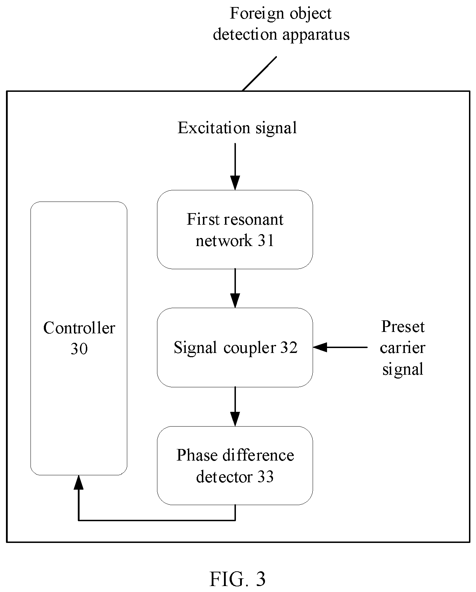

FIG. 3 is a schematic diagram of a structure of a foreign object detection apparatus according to an embodiment of this application. As shown in FIG. 3, the foreign object detection apparatus may mainly include a controller 30, a first resonant network 31, a signal coupler 32, and a phase difference detector 33. The controller 30 is connected to an end of the phase difference detector 33, another end of the phase difference detector 33 is connected to an end of the signal coupler 32, and another end of the signal coupler 32 is connected to an end of the first resonant network 31.

During actual operation, the first resonant network 31 may receive an excitation signal (denoted as S1 herein), and operate normally under the action of the excitation signal S1. The signal coupler 32 may obtain a current signal (referred to as a resonance current signal S2 in the following descriptions for ease of differentiation) corresponding to the first resonant network 31 when the first resonant network 31 operates normally under the action of the excitation signal S1. Herein, it should be understood that the resonance current signal S2 indicates a value of a current that flows through the first resonant network 31 when the first resonant network 31 operates normally under the action of the excitation signal S1. The signal coupler 32 may further receive a preset carrier signal (denoted as S3 herein), and couple the preset carrier signal S3 to the resonance current signal S2 to obtain a coupled current signal (denoted as S4 herein). It should be noted that, it needs to be ensured that frequencies of the preset carrier signal S3 and the excitation signal S2 are the same. The preset carrier signal S3 may be a signal with any waveform and any proper signal amplitude, and the excitation signal S1 may also be a signal with any waveform and any proper signal amplitude. This is not limited in this application. The phase difference detector 33 may receive the coupled current signal S4 output by the signal coupler 32, extract a low-frequency signal component included in the coupled current signal S4, and determine a phase difference signal (denoted as S5 herein) based on the low-frequency signal component. Herein, the low-frequency signal component is a signal component that has a signal frequency less than or equal to a first preset frequency and that is included in the coupled circuit signal S4. Then the phase difference detector 33 may transmit the phase difference signal S5 to the controller 30. Herein, an amplitude of the phase difference signal S5 correspondingly indicates a value of a phase difference between the excitation signal S1 and the resonance current signal S2. Then the controller 30 may determine, based on the amplitude of the phase difference signal S5, whether a foreign object exists in a detection area corresponding to the first resonant network 31. Herein, it should be noted that the detection area corresponding to the first resonant network 31 may be determined based on a shape and a size of the first resonant network 31. The controller 30 may be implemented by using a framework-based modular system, or may be implemented by using a system-on-a-chip including a single integrated chip. This is not limited in this application.

It can be learned from an operating principle of a resonant network that, when a physical characteristic of a component in the resonant network remains unchanged, an output signal (which is a current signal or a voltage signal, where a current signal is used as an example for description in this application) of the resonant network and an excitation signal of the resonant network theoretically completely overlap, and have same phases and amplitudes. When some foreign objects exist around the resonant network, the foreign objects may cause a change of the physical characteristic of the component in the resonant network. As a result, a phase and an amplitude of the output signal of the resonant network change to some extent relative to the excitation signal. According to this principle, the foreign object detection apparatus provided in this application may directly detect, by using the signal coupler 32 and the phase difference detector 33, the phase difference signal S5 that can indicate the phase difference between the excitation signal S1 of the first resonant network 31 and the resonance current signal S2 corresponding to the excitation signal S1 of the first resonant network 31, and perform, by using the controller 30, simple processing on the phase difference signal S5 to determine whether a foreign object exists in the detection area corresponding to the first resonant network 31. The foreign object detection apparatus provided in this application directly detects, by using the signal coupler 32 and the phase difference detector 33, the phase difference signal S5 that can indicate the phase difference between the excitation signal S1 and the resonance current signal S2, and then performs simple processing on the phase difference signal S5 to implement foreign object detection. This reduces overall system complexity and costs compared with a conventional manner in which a controller processes a current parameter or a voltage parameter detected by an analog circuit to obtain a phase angle or a frequency parameter, and then performs foreign object detection based on the phase angle or the frequency parameter. In addition, the foreign object detection apparatus provided in this application determines, by using the phase difference signal, whether a foreign object exists. This can avoid the following problem in a manner in which foreign object detection is directly performed based on a measured current parameter or voltage parameter: Detection precision is low because the current parameter or the voltage parameter is subject to interference from primary power. Therefore, with the foreign object detection apparatus provided in this application, costs of foreign object detection can be reduced, and precision and reliability of foreign object detection can be improved.

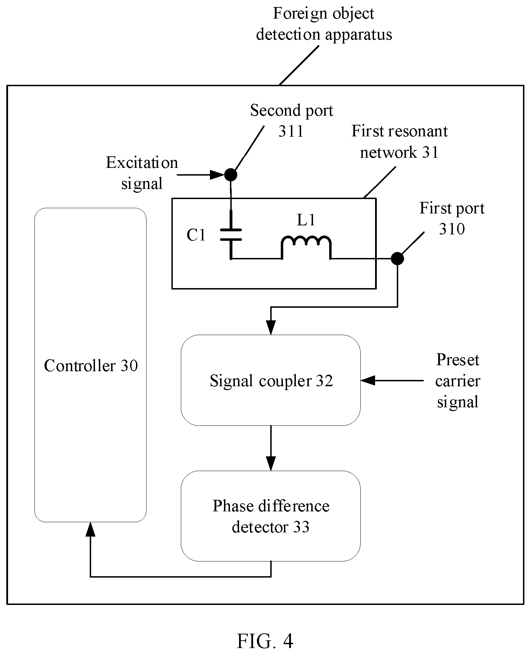

In some feasible implementations, FIG. 4 is a schematic diagram of another structure of a foreign object detection apparatus according to an embodiment of this application. As shown in FIG. 4, the first resonant network 31 may include a first port 310, a second port 311, a resonant capacitor C1, and an inductor coil L1. An end of the resonant capacitor C1 is connected to the second port 311, another end of the resonant capacitor C1 is connected to an end of the inductor coil L1, and another end of the inductor coil L1 is connected to the first port 310. During actual operation, the second port 311 is configured to receive the excitation signal S1, and transmit the excitation signal S1 to the resonant capacitor C1. Resonance occurs between the resonant capacitor C1 and the inductor coil L1, and a current flowing through the inductor coil L1 is finally output through the first port 310.

Herein, it should be noted that the resonant capacitor C1 and the inductor coil L1 shown in FIG. 4 are connected in a series resonance manner, and the connection manner is merely an example. During actual implementation, the resonant capacitor C1 and the inductor coil L1 may alternatively be connected in a parallel resonance manner. This is not limited in this application. The inductor coil L1 may be an inductor coil of any shape and with any quantity of turns. When a foreign object (especially a metal foreign object) approaches the inductor coil, a physical characteristic (for example, an impedance characteristic) of the inductor coil changes, and consequently, a current and a voltage on the inductor coil change. It should be noted that a capacitance of the resonant capacitor C1 may be determined based on the impedance characteristic of the inductor coil L1. To be specific, the capacitance of the resonant capacitor C1 needs to be matched and selected based on the impedance characteristic of the inductor coil L1.

Herein, it should be further noted that a conclusion obtained through a plurality of tests on the first resonant network 31 provided in this application is as follows: In series resonance, a foreign object causes a more significant phase change between the excitation signal S1 and the resonance current signal S2. Therefore, preferably, the resonant capacitor C1 and the inductor coil L1 are connected in a series resonance manner. This can improve accuracy of foreign object detection.

This embodiment of this application further provides a plurality of possible specific implementations of the signal coupler 32. The following separately describes the plurality of possible specific implementations in detail.

Specific implementation 1 of the signal coupler:

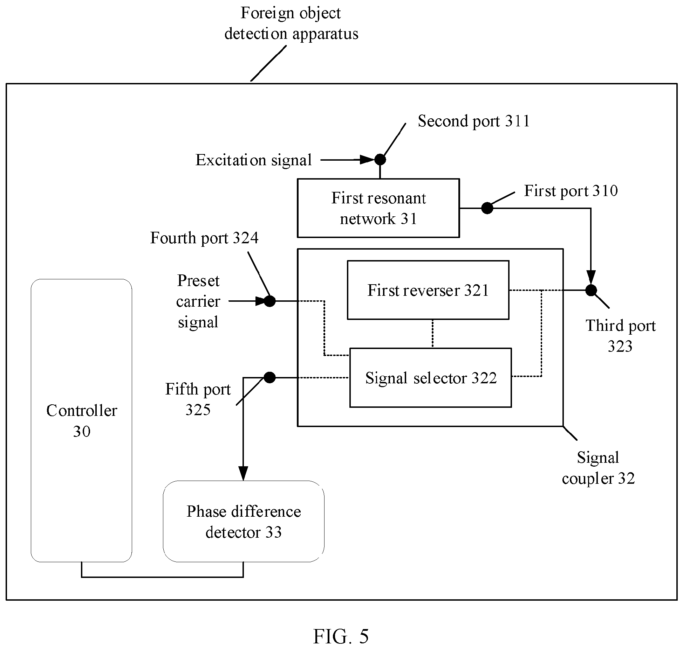

FIG. 5 is a schematic diagram of another structure of a foreign object detection apparatus according to an embodiment of this application. As shown in FIG. 5, the signal coupler 32 may include a first reverser 321, a signal selector 322, a third port 323, a fourth port 324, and a fifth port 325. An end of the first reverser 321 is connected to the first port 310 of the first resonant network 31 through the third port 323, and another end of the first reverser 321 is connected to an end of the signal selector 322. Another end of the signal selector 322 is connected to the fourth port 324. Still another end of the signal selector 322 is connected to an end of the phase difference detector 33 through the fifth port 325. Still another end of the signal selector 322 is connected to the first port of the first resonant network 31 through the third port 323.

During actual operation, the first reverser 321 may receive, through the third port 323, the resonance current signal S2 corresponding to the first resonant network 31 when the first resonant network 31 operates normally under the action of the excitation signal S1, perform 180-degree phase shift on the resonance current signal S2 to obtain a reverse resonance current signal corresponding to the resonance current signal (to be specific, a phase difference between the reverse resonance current signal and the resonance current signal is 180 degrees, and the reverse resonance current signal is denoted as S6 herein), and transmit the reverse resonance current signal S6 to the signal selector 322. The signal selector 322 may further receive the preset carrier signal S3 through the fourth port 324, select, based on the preset carrier signal S3, the reverse resonance current signal S6 that comes from the first reverser 321 or the resonance current signal S2 that comes from the third port 323 as the coupled current signal S4, and transmit the coupled current signal S4 to the phase difference detector 33 through the fifth port 325. The signal selector 322 selects, based on a value of a signal amplitude of the preset carrier signal S3, the resonance current signal S2 or the reverse resonance current signal S6 as the coupled current signal S4 to be output. For example, after receiving the preset carrier signal S3, if the signal selector 322 determines that the signal amplitude of the preset carrier signal S3 is greater than or equal to a fourth preset amplitude, the signal selector 322 may use the resonance current signal S2 as the coupled current signal S4, and output the coupled current signal S4 through the fifth port 325. If the signal selector 322 determines that the signal amplitude of the preset carrier signal S3 is less than the fourth preset amplitude, the signal selector 322 may use the reverse resonance current signal S6 as the coupled current signal S4, and output the coupled current signal S4 through the fifth port 325.

Preferably, the excitation signal S1 may be a sine signal, the preset carrier signal S3 may be a square wave signal, and a phase difference between the excitation signal S1 and the preset carrier signal S3 is 90 degrees.

The following describes operating principles of the first reverser 321 and the signal selector 322 by using examples with reference to specific examples of the foregoing signals.

It is assumed that the excitation signal S1 is a sine signal $A_0 \times \sin(\omega_0 \times t + \theta_0)$, that is, the excitation signal $S1 = A_0 \times \sin(\omega_0 \times t + \theta_0)$, where $\omega_0$ is an angular frequency of the excitation signal S1, $\theta_0$ is an initial phase of the excitation signal S1, and $A_0$ is an initial amplitude of the excitation signal S1. It is assumed that the preset carrier signal S3 is

$$\begin{pmatrix} A_2, (\theta_0 + (2n - 1)\pi, \theta_0 + 2n\pi) \\ A_3, (\theta_0 + 2n\pi, \theta_0 + (2n + 1)\pi) \end{pmatrix}$$, where n is an integer, $A_2$ is a maximum amplitude of the preset carrier signal

S3, and $A_3$ is a minimum amplitude of the preset carrier signal S3. It can be understood that, for the preset carrier signal S3, in a range of $((\theta_0 + (2n - 1)\pi, \theta_0 + 2n\pi))$, an amplitude of the preset carrier signal S3 is $A_2$; and in a period of $(\theta_0 + 2n\pi, \theta_0 + (2n + 1)\pi)$, an amplitude of the preset carrier signal S3 is $A_3$. Herein, the amplitude $A_2$ is greater than the fourth preset amplitude, and the amplitude $A_3$ is less than the fourth preset amplitude. Preferably, $A_2 = -A_3$. To be specific, the preset carrier signal S3 is a square wave. For ease of description, a specific scenario in which the preset carrier signal S3 is a square wave signal and the preset carrier signal S3 is ahead of the excitation signal S1 by a 90-degree phase angle is used below as an example to describe the preset carrier signal S3, that is, the preset carrier signal

$$S3 = \begin{pmatrix} A_2, (\theta_0 + \frac{\pi}{2} + (2n - 1)\pi, \theta_0 + \frac{\pi}{2} + 2n\pi) \\ -A_2, (\theta_0 + \frac{\pi}{2} + 2n\pi, \theta_0 + \frac{\pi}{2} + (2n + 1)\pi) \end{pmatrix}$$. In addition, it is assumed that the resonance current signal S2 is

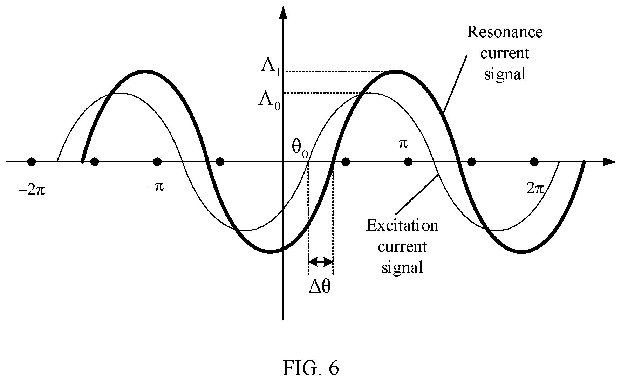

$A_1 \times \sin(\omega_0 \times t + \theta_0 + \Delta\theta)$. Based on an operating feature of the first resonant network 31, it can be learned that, when calibration of the entire foreign object detection apparatus is completed and no foreign object exists in the detection area of the first resonant network 31, the resonance current signal S2 should completely overlap the excitation signal S1, that is, $\Delta\theta = 0$, and $A_1 = A_0$. When a foreign object exists in the detection area of the first resonant network 31, the impedance characteristic of the first resonant network 31 and a spurious parameter of a line change. Consequently, a specific phase difference occurs between the resonance current signal S2 and the excitation signal S1. In this case, $\Delta\theta$ is not equal to 0. In addition, an amplitude of the resonance current signal S2 also becomes different from an amplitude of the excitation signal S1, that is, changes from $A_0$ to $A_1$. For example, FIG. 6 is a schematic diagram of a waveform change according to an embodiment of this application. As shown in FIG. 6, when a foreign object exists in the detection area of the first resonant network 31, the resonance current signal S2 has a specific phase offset relative to the excitation signal S1, and an amplitude of the resonance current signal S2 also changes to some extent. Herein, it should be understood that the resonance current signal S2 shown in FIG. 6 has a positive phase shift relative to the excitation signal S1, and an amplitude of the resonance current signal S2 also increases. During actual implementation, the resonance current signal S2 may alternatively have a negative phase shift relative to the excitation signal S1, and an amplitude of the resonance current signal S2 also decreases. Therefore, FIG. 6 is merely an example, and does not constitute a limitation.

During actual operation, the first reverser 321 first performs 180-degree phase shift on the received resonance current signal S2 to obtain the reverse resonance current signal S6, that is, the reverse resonance current signal $S6 = -A_1 \times \sin(\omega_0 \times t + \theta_0 + \Delta\theta)$. Then the signal selector 322 selects, based on the preset carrier signal S3, the resonance current signal S2 or the reverse resonance current signal S6 as the coupled current signal S4 to be output.

For example, in a range of ( $\theta_0 + \frac{\pi}{2} + (2n - 1)\pi, \theta_0 + \frac{\pi}{2} + 2n\pi$ ), an amplitude of the preset carrier signal S3 is

$A_2$. The signal selector 322 may determine that the amplitude of the preset carrier signal S3 is greater than the fourth preset amplitude, and the signal selector may output the resonance current signal S2 as the coupled current signal S4.

In a range of ( $\theta_0 + \frac{\pi}{2} + 2n\pi, \theta_0 + \frac{\pi}{2} + (2n + 1)\pi$ ), an amplitude of the preset carrier signal S3 is $-A_2$. The

signal selector 322 may determine that the amplitude of the preset carrier signal S3 is less than the fourth preset amplitude. In this case, the signal selector 322 may output the reverse resonance current signal S6 as the coupled current signal S4.

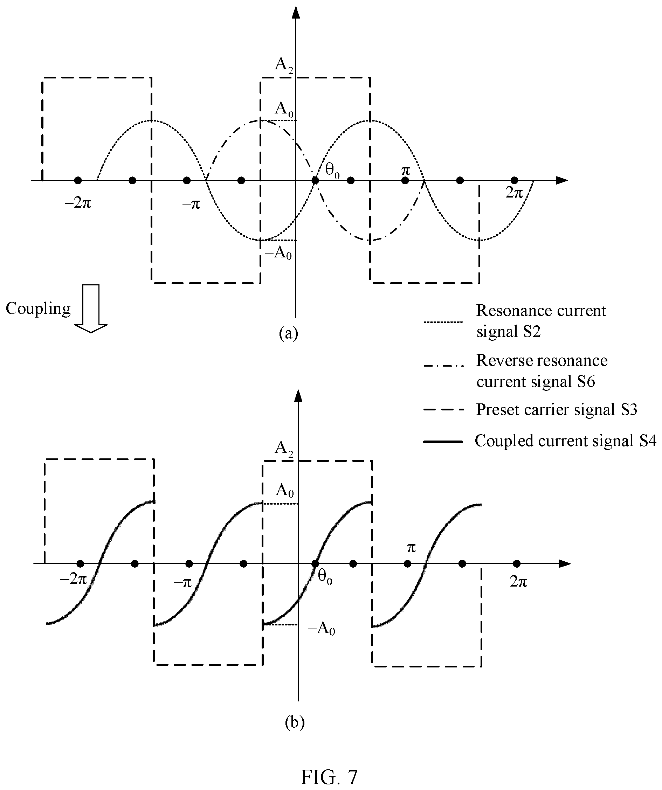

For example, FIG. 7 is a schematic diagram of signal coupling according to an embodiment of this application. As shown in FIG. 7, when no foreign object exists in the detection area, the resonance current signal S2 completely overlaps the excitation signal S1, and waveforms of the resonance current signal S2, the reverse resonance current signal S6, and the preset carrier signal S3 are shown in a part (a) in FIG. 7. The coupled current signal S4 obtained through coupling by the signal selector 322 and the preset carrier signal S3 are shown in a part (b) in FIG. 7. Therefore, based on the expressions of the preset carrier signal S3, the resonance current signal S2, and the reverse resonance current signal S6 and the operating principle of the signal selector 322, it may be determined that the coupled current signal S4 should meet the following relational expression (1) when no foreign object exists in the detection area:

$$S4 = \begin{cases} A_0 \times \sin(\omega_0 \times t + \theta_0), (\frac{\pi}{2} + (2n-1)\pi < \omega_0 \times t < \frac{\pi}{2} + 2n\pi) \\ -A_0 \times \sin(\omega_0 \times t + \theta_0), (\frac{\pi}{2} + 2n\pi < \omega_0 \times t < \frac{\pi}{2} + (2n-1)\pi) \end{cases} \quad (1)$$

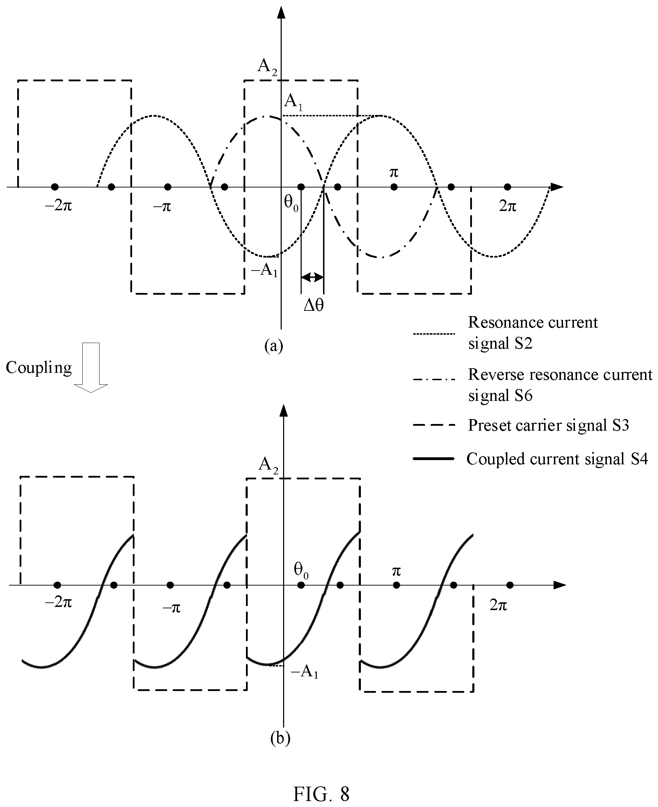

For another example, FIG. 8 is another schematic diagram of signal coupling according to an embodiment of this application. When a foreign object exists in the detection area, phases and amplitudes of the resonance current signal S2 and the excitation signal S1 are different. Waveforms of the resonance current signal S2, the reverse resonance current signal S7, and the preset carrier signal S3 are shown in a part (a) in FIG. 8. The coupled current signal S4 obtained through coupling by the signal selector 322 and the preset carrier signal S3 are shown in a part (b) in FIG. 8. Therefore, based on the expressions of the preset carrier signal S3, the resonance current signal S2, and the reverse resonance current signal S6 and the operating principle of the signal selector 322, it may be determined that the coupled current signal S4 should meet the following relational expression (2) when a foreign object exists in the detection area:

$$S4 = \begin{cases} A_1 \times \sin(\omega_0 \times t + \theta_0 + \Delta\theta), (\frac{\pi}{2} + (2n-1)\pi < \omega_0 \times t < \frac{\pi}{2} + 2n\pi) \\ -A_1 \times \sin(\omega_0 \times t + \theta_0 + \Delta\theta), (\frac{\pi}{2} + 2n\pi < \omega_0 \times t < \frac{\pi}{2} + (2n-1)\pi) \end{cases} \quad (2)$$

In the foregoing implementation, the coupled current signal S4 is obtained through coupling by the first reverser 321 and the signal selector 322 that have simple structures and that are widely used. This can reduce costs of the foreign object detection apparatus, and can also simplify a structure of the foreign object detection apparatus and improve stability and robustness of the foreign object detection apparatus.

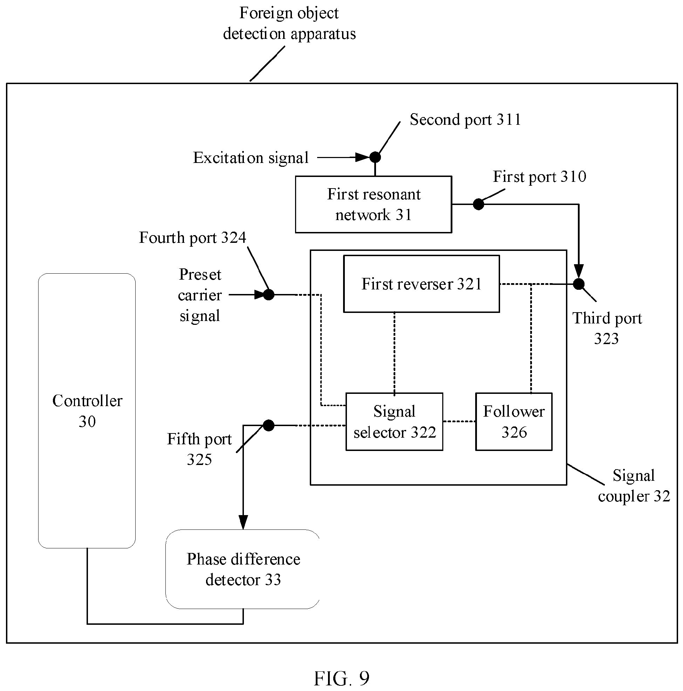

Optionally, FIG. 9 is a schematic diagram of another structure of a foreign object detection apparatus according to an embodiment of this application. As shown in FIG. 9, the signal coupler 32 may further include a follower 326. An end of the signal selector 322 is connected to the third port 323 through the follower 326. During actual operation, the follower 326 is configured to implement phase follow-up, so that a phase of the resonance current signal S2 does not change during transmission between the third port 323 and the signal selector 322. With the follower 326, a phase change of the resonance current signal S2 due to interference during transmission can be avoided. This ensures that a more accurate phase difference can be detected subsequently.

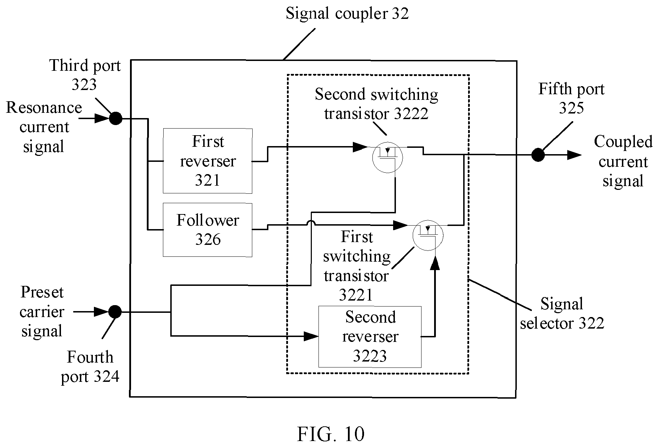

Further, FIG. 10 is a schematic diagram of a structure of a signal coupler according to an embodiment of this application. As shown in FIG. 10, the signal selector 322 in the signal coupler 32 may include a first switching transistor 3221, a second switching transistor 3222, and a second reverser 3223. A first end of the first switching transistor 3221 is connected to an end of the second reverser 3223, and another end of the second reverser 3223 is connected to the fourth port 324. A first end of the second switching transistor 3222 is connected to the fourth port 324. A second end of the first switching transistor 3221 is connected to the third port 323 through the follower 326, and a second end of the second switching transistor 3222 is connected to the third port 323 through the first reverser 321. A third end of the first switching transistor 3221 and a third end of the second switching transistor 3222 are both connected to the fifth port 325. In other words, the preset carrier signal is input to the first end of the first switching transistor 3221 through the second reverser 3223, and the preset carrier signal is also input to the first end of the second switching transistor 3222. The resonance current signal is input to the second end of the first switching transistor 3221, and the reverse resonance current signal is input to the second end of the second switching transistor 3222. The third end of the first switching transistor 3221 is connected to the third end of the second switching transistor 3222 and serves as an output end of the signal selector 322. In this implementation, the signal selector 322 is implemented by using the switching transistors and the reverser that have stable structures and that are cost-effective. This can facilitate integration of the signal selector 322, and can also further reduce implementation costs of the foreign object detection apparatus.

During actual operation, in some time periods, the preset carrier signal S3 may enable, through the second reverser 3223, the first switching transistor 3221 to be turned on, and the preset carrier signal S3 may also enable the second switching transistor 3222 to be turned off, so that the resonance current signal S2 can be output through the fifth port 325 as the coupled current signal S4. In some other time periods, the preset carrier signal S3 may enable, through the second reverser 3223, the first switching transistor 3221 to be turned off, and the preset carrier signal S3 may also enable the second switching transistor 3222 to be turned on, so that the reverse resonance current signal S7 is output through the fifth port 325 as the coupled current signal S4. Herein, it should be noted that, to enable the first switching transistor 3221 and the second switching transistor 3222 to switch between two switch states, that is, an on state and an off state, under the control of the preset carrier signal S3, the signal amplitude $A_2$ of the preset carrier signal S3 should be greater than or equal to switching-on voltages of the first switching transistor 3221 and the second switching transistor 3222. Herein, it should be understood that the switching-on voltages of the first switching transistor 3221 and the second switching transistor 3222 may be the same or different. For ease of description, a scenario in which the switching-on voltages of the first switching transistor 3221 and the second switching transistor 3222 are equal to the fourth preset amplitude is used below as an example for description.

With reference to the structure shown in FIG. 10 and the foregoing descriptions of the preset carrier signal S3, the following describes the operating principle of the signal selector 322 by using an example. Herein, it is assumed that the third preset amplitude is $A_4$, and $A_2$ is greater than $A_4$. As described above, the preset carrier signal

$$S3=\begin{pmatrix} A_2, (\theta_0 + \frac{\pi}{2} + (2n-1)\pi, \theta_0 + \frac{\pi}{2} + 2n\pi) \\ -A_2, (\theta_0 + \frac{\pi}{2} + 2n\pi, \theta_0 + \frac{\pi}{2} + (2n+1)\pi) \end{pmatrix} \quad,\quad$$ and in a time period corresponding to (

$\theta_0 + \frac{\pi}{2} + (2n-1)\pi, \theta_0 + \frac{\pi}{2} + 2n\pi$ ), a signal amplitude of the preset carrier signal S3 is $A_2$. In this case, an input voltage at a gate of the second switching transistor 3222 is $A_2$. The voltage is greater than a switching-on voltage of the second switching transistor 3222. Therefore, the second switching transistor 3222 is in an on state. In this case, the preset carrier signal S3 undergoes a 180-degree phase shift through the second reverser 3223, and the signal amplitude of the preset carrier signal S3 changes to -$A_2$, that is, an input voltage at a gate of the first switching transistor 3221 is -$A_2$. The voltage is less than a switching-on voltage of the first switching transistor 3221. Therefore, the first switching transistor 3221 is in an off state. In this way, in the time period corresponding to ( $\theta_0 + \frac{\pi}{2} + (2n-1)\pi, \theta_0 + \frac{\pi}{2} + 2n\pi$ ), the reverse resonance current signal S6 is output through the fifth port 325 as the coupled current signal S4.

Similarly, in a time period corresponding to ( $\theta_0 + \frac{\pi}{2} + 2n\pi, \theta_0 + \frac{\pi}{2} + (2n+1)\pi$ ), a signal amplitude of the preset carrier signal S3 is -$A_2$. In this case, an input voltage at the gate of the second switching transistor 3222 is -$A_2$. The voltage is less than the switching-on voltage of the second switching transistor 3222. Therefore, the second switching transistor 3222 is in an off state. In this case, the preset carrier signal S3 undergoes a 180-degree phase shift through the second reverser 3223, and the signal amplitude of the preset carrier signal S3 changes to $A_2$, that is, an input voltage at the gate of the first switching transistor 3221 is $A_2$. The voltage is greater than the switching-on voltage of the first switching transistor 3221. Therefore, the first switching transistor 3221 is in an on state. In this way, in the time period corresponding to ( $\theta_0 + \frac{\pi}{2} + 2n\pi, \theta_0 + \frac{\pi}{2} + (2n+1)\pi$ ), the resonance current signal S2 is output through the fifth port 325 as the coupled current signal S4.

Herein, it should be noted that the first switching transistor 3221 and the second switching transistor 3222 shown in FIG. 10 are metal-oxide semiconductor field-effect transistors (MOSFET, MOS transistor for short). FIG. 10 is merely an example. In actual application, the switching transistor (for example, the first switching transistor 3221 and the second switching transistor 3222) in this embodiment of this application may alternatively be of another type. For example, the switching transistor in this application may alternatively be an insulated gate bipolar transistor (IGBT) or a silicon carbide metal-oxide semiconductor field-effect transistor (SiC MOSFET ). This is not limited in this application. When the first switching transistor 3221 and the second switching transistor 3222 are IGBT transistors, first ends of the first switching transistor 3221 and the second switching transistor 3222 are bases, second ends of the first switching transistor 3221 and the second switching transistor 3222 are collectors, and third ends of the first switching transistor 3221 and the second switching transistor 3222 are emitters. When the first switching transistor 3221 and the second switching transistor 3222 are MOS transistors, first ends of the first switching transistor 3221 and the second switching transistor 3222 are gates, second ends of the first switching transistor 3221 and the second switching transistor 3222 are drains, and third ends of the first switching transistor 3221 and the second switching transistor 3222 are sources.

Herein, it should be further noted that the reverser (for example, the first reverser 321 and the second reverser 3223) in the specific implementation 1 may be a device or a circuit in any implementation form that is capable of performing 180-degree phase shift on an input signal, for example, a typical complementary metal oxide semiconductor (CMOS) reverser, or a transistor-transistor logic (TTL) NAND gate circuit. This is not limited in this application.

Specific implementation 2 of the signal coupler:

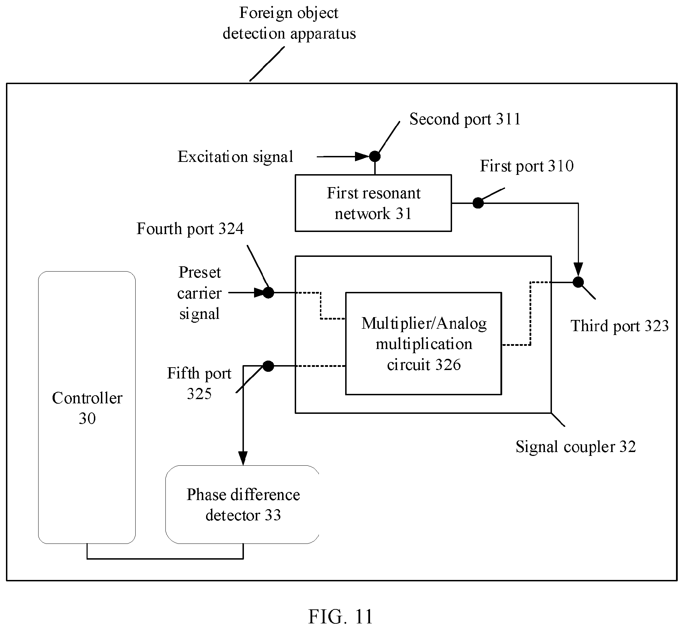

FIG. 11 is a schematic diagram of another structure of a foreign object detection apparatus according to an embodiment of this application. As shown in FIG. 11, the signal coupler 32 may include a multiplier/analog multiplication circuit 326, a third port 323, a fourth port 324, and a fifth port 325. A first end of the multiplier/analog multiplication circuit 326 is connected to the first port 310 of the first resonant network 31 through the third port 323. A second end of the multiplier/analog multiplication circuit 326 is connected to the fourth port 324. A third end of the multiplier/analog multiplication circuit 326 is connected to an end of the phase difference detector 33 through the fifth port 325.

During actual operation, the multiplier/analog multiplication circuit 326 may be configured to multiply the resonance current signal S2 (herein, it should be noted that the descriptions of the signals in the specific implementation 1 are still used in the specific implementation 2) received by the multiplier/analog multiplication circuit 326 through the third port 323, by the preset carrier signal S3 received by the multiplier/analog multiplication circuit 326 through the fourth port 324, to obtain the coupled current signal S4. Herein, it should be noted that the preset carrier signal S3 and the excitation signal S1 may be sine signals with a same frequency in this implementation.

For example, it is assumed that the preset carrier signal S3 is a sine signal $\sin\left(\omega_0 \times t + \theta_0 + \frac{\pi}{2}\right)$ (herein, it is assumed that there is a 90-degree phase difference between the preset carrier signal S3 and the excitation signal S1), the excitation signal S1 is a sine signal $A_0 \times \sin(\omega_0 \times t + \theta_0)$, and the resonance current signal S2 is $A_1 \times \sin(\omega_0 \times t + \theta_0 + \Delta\theta)$. It can be learned from the foregoing content that, when calibration of the entire foreign object detection apparatus is completed and no foreign object exists in the detection area of the first resonant network 31, the resonance current signal S2 should completely overlap the excitation signal S1, that is, $\Delta\theta = 0$, and $A_1 = A_0$. When a foreign object exists in the detection area of the first resonant network 31, $\Delta\theta$ is not equal to 0, and an amplitude of the resonance current signal S2 also changes from $A_0$ to $A_1$. After receiving the preset carrier signal S3 and the resonance current signal S2, the multiplier/analog multiplication circuit 326 may multiply the preset carrier signal S1 by the resonance current signal S2 to obtain the coupled current signal S4. Herein, the coupled current signal S4 meets the following relational expression (3):

$$S4 = \frac{1}{2}A_1 \times \sin(2\omega_0 \times t + 2\theta_0 + \Delta\theta) + \frac{1}{2}A_1 \times \sin\Delta\theta \qquad (3)$$

Herein, it should be noted that the multiplier/analog multiplication circuit 326 may be a device or a circuit in any implementation form that is capable of performing multiplication on an input signal. A specific implementation form of the multiplier/analog multiplication circuit 326 is not limited in this application.

In the foregoing implementation, signal coupling is performed on the preset carrier signal S1 and the resonance current signal S2 by using the multiplier or the analog multiplication circuit. The method is simple and easy to implement, and efficiency of foreign object detection can be improved.

Further, refer to FIG. 5. After obtaining the coupled current signal S4 through coupling, the signal coupler 32 may transmit the coupled current signal S4 to the phase difference detector 33. After receiving the coupled current signal S4, the phase difference detector 33 may filter the coupled current signal S4 to extract a low-frequency signal component with a frequency less than or equal to the first preset frequency from the coupled current signal S4. Then the phase difference detector 33 may determine the phase difference signal S5 based on the low-frequency signal component, and send the phase difference signal S5 to the controller 30.

With reference to the content in the specific implementation 1 and the specific implementation 2 of the signal coupler, the following describes in detail a principle of detecting the phase difference signal S5 by the phase difference detector 33. As described above, in the specific implementation 1 of the signal coupler, when no foreign object exists in the detection area, the coupled current signal S4 meets the formula (1); or when a foreign object exists in the detection area, the coupled current signal S4 meets the formula (2). It can be learned from the formula (1) or the formula (2) that the coupled current signal S4 is equivalent to a product of the resonance current signal S2 and a rectangular wave signal with an amplitude of (1, -1) and with a same frequency as that of the resonance current signal S2. It can be learned from a signal processing principle that a fundamental wave of the rectangular wave signal is a sine wave. Therefore, the process, described in the specific implementation 1 of the signal coupler 32, of coupling the preset carrier signal S3 to the resonance current signal S2 to obtain the coupled current signal S4 is essentially equivalent to a process of multiplying the resonance current signal S2 by a sine signal with a same frequency as that of the resonance current signal S2. It is assumed that the fundamental wave (denoted as S7 herein) of the rectangular wave signal is $\sin\left(\omega_0 \times t + \theta_0 + \frac{\pi}{2}\right)$ ), and the resonance current signal S2 is $A_1 \times \sin(\omega_0 \times t + \theta_0 + \Delta\theta)$. In this case, the coupled current signal S4 may be equivalent to the following signal: $\frac{1}{2}A_1 \times \sin(2\omega_0 \times t + 2\theta_0 + \Delta\theta) + \frac{1}{2}A_1 \times \sin\Delta\theta$ . Similarly, in the signal coupling process described in the specific implementation 2 of the signal coupler, the following coupled current signal is finally obtained: $\frac{1}{2}A_1 \times \sin(2\omega_0 \times t + 2\theta_0 + \Delta\theta) + \frac{1}{2}A_1 \times \sin\Delta\theta$ . When the coupled current signal S4 is $\frac{1}{2}A_1 \times \sin(2\omega_0 \times t + 2\theta_0 + \Delta\theta) + \frac{1}{2}A_1 \times \sin\Delta\theta$ , the signal includes a low-frequency signal component $\frac{1}{2}A_1 \times \sin\Delta\theta$ and a high-frequency signal component $\frac{1}{2}A_1 \times \sin(2\omega_0 \times t + 2\theta_0 + \Delta\theta)$ . The phase difference detector 33 may filter out the high-frequency signal component $\frac{1}{2}A_1 \times \sin(2\omega_0 \times t + 2\theta_0 + \Delta\theta)$ included in the coupled current signal S4, to obtain the low-frequency signal component $\frac{1}{2}A_1 \times \sin\Delta\theta$ included in the coupled current signal S4. Then the phase difference detector 33 may determine the low-frequency signal component $\frac{1}{2}A_1 \times \sin\Delta\theta$ as the phase difference signal S5, and send the phase difference signal S5 to the controller 30.

Optionally, it can be learned from the low-frequency signal component $\frac{1}{2}A_1 \times \sin\Delta\theta$ that, when $\Delta\theta$ is less than 0 (to be specific, a phase of the resonance current signal S2 lags behind an initial phase of the excitation signal S1), an amplitude of the low-frequency signal component is a negative voltage. When the controller 30 is not capable of collecting a negative voltage, the phase difference detector 33 is further configured to obtain a positive direct-current signal (herein, it is assumed that an amplitude of the direct-current signal is C), and couple the direct-current signal to the low-frequency signal component $\frac{1}{2}A_1 \times \sin\Delta\theta$ to obtain a low-frequency signal component $\frac{1}{2}A_1 \times \sin\Delta\theta + C$ resulting from level conversion, where an amplitude of the low-frequency signal component $\frac{1}{2}A_1 \times \sin\Delta\theta + C$ resulting from level conversion is a positive voltage. Then the phase difference detector 33 may determine the low-frequency signal component $\frac{1}{2}A_1 \times \sin\Delta\theta + C$ resulting from level conversion as the phase difference signal S5.

It should be noted that, in actual application, the phase difference detector 33 may be a device or a circuit in any implementation form that is capable of filtering out the high-frequency signal component in the coupled current signal S4, for example, a common inductor filter, capacitor filter, or L-type filter. A specific implementation form of the phase difference detector 33 is not limited in this application.

Further, this embodiment of this application further provides a plurality of implementations of determining, by the controller 30 based on the phase difference signal S5, whether a foreign object exists in the detection area. The following separately describes the plurality of possible specific implementations in detail. Herein, when the phase difference signal S5 is $\frac{1}{2}A_1 \times \sin\Delta\theta$ or $\frac{1}{2}A_1 \times \sin\Delta\theta + C$, processes of determining, by the controller 30, whether a foreign object exists in the detection area are the same. Therefore, a scenario in which the phase difference signal S5 is $\frac{1}{2}A_1 \times \sin\Delta\theta$ is used below as an example to describe a process of determining, by the controller 30, whether a foreign object exists in the detection area.

Determining manner 1:

After obtaining the phase difference signal S5, the controller 30 may first determine an amplitude of the phase difference signal S5. Herein, with reference to the foregoing example, the amplitude of the phase difference signal S5 is $\frac{1}{2}A_1 \times \sin\Delta\theta$. Then the controller 30 may determine whether the amplitude of the phase difference signal S5 is less than a first preset amplitude and is greater than a second preset amplitude. If the controller 30 determines that $\frac{1}{2}A_1 \times \sin\Delta\theta$ is less than the first preset amplitude and is greater than the second preset amplitude, the controller 30 may determine that no foreign object exists in the detection area corresponding to the first resonant network 31. If the controller 30 determines that $\frac{1}{2}A_1 \times \sin\Delta\theta$ is greater than or equal to the first preset amplitude or is less than or equal to the second preset amplitude, the controller 30 may determine that a foreign object exists in the detection area corresponding to the first resonant network 31.

In the foregoing implementation, foreign object detection is directly performed through comparison between the amplitude of the phase difference signal S5 and values of the first preset amplitude and the second preset amplitude. The method is simple and easy to implement, a requirement for a data processing capability of the controller 30 can be reduced, and costs of foreign object detection can be reduced.

Determining manner 2:

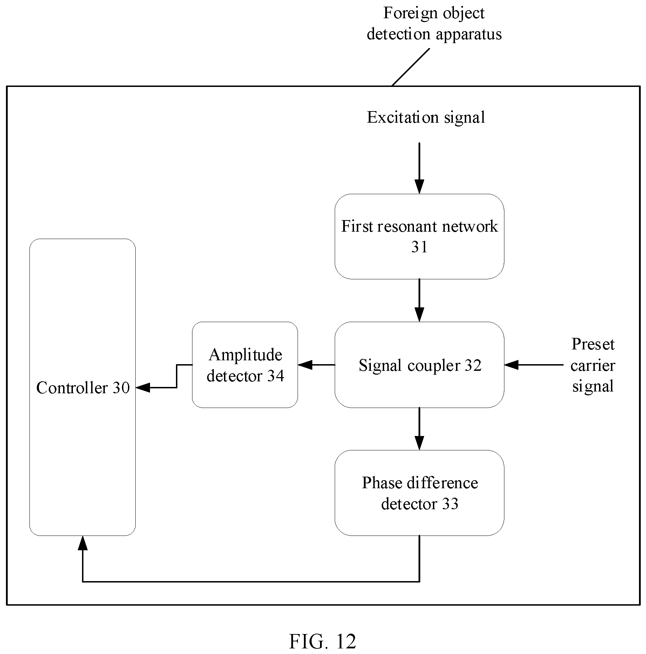

FIG. 12 is a schematic diagram of another structure of a foreign object detection apparatus according to an embodiment of this application. As shown in FIG. 12, the foreign object detection apparatus may further include an amplitude detector 34. An end of the amplitude detector 34 is connected to an end of the signal coupler 32, and another end of the amplitude detector 34 is connected to the controller 30. During actual operation, the amplitude detector 34 may receive the coupled current signal S4 from the signal coupler 32, detect a signal amplitude of the coupled current signal S4 (referred to as a target signal amplitude in the following descriptions for ease of understanding), and transmit the target signal amplitude to the controller 30. Herein, it should be noted that the amplitude detector 34 may be a device or a circuit in any implementation form that is capable of detecting an amplitude of a current signal. A specific implementation form of the amplitude detector 34 is not limited in this application.

Further, the controller 30 may determine, based on the target signal amplitude and an amplitude of the phase difference signal S5, whether a foreign object exists in the detection area corresponding to the first resonant network 31. With reference to the content described above, it can be learned that the amplitude of the phase difference signal S5 is related to a phase difference (namely, $\Delta\theta$ in the foregoing descriptions) between the excitation signal S1 and the resonance current signal S2 and an amplitude (namely, $A_1$ in the foregoing descriptions) of the resonance current signal S2. Therefore, herein, whether a foreign object exists in the detection area is determined based on both the amplitude of the resonance current signal S2 and the amplitude of the phase difference signal S5, so that reliability of a determining result and detection precision of the foreign object detection apparatus can be improved.

In a first optional specific implementation, after determining the amplitude of the phase difference signal S5, the controller 30 may calculate a quotient (denoted as R1 herein for ease of description) of the amplitude of the phase difference signal S5 and the target signal amplitude. Then, if the controller 30 determines that the quotient R1 is greater than a second preset threshold and is less than a first preset threshold, the controller 30 may determine that no foreign object exists in the detection area corresponding to the first resonant network 31. If the controller 30 determines that the quotient R1 is less than or equal to the second preset threshold or is greater than or equal to the first preset threshold, the controller 30 may determine that a foreign object exists in the detection area corresponding to the first resonant network 31.

For example, with reference to the foregoing example, the phase difference signal S5 is $\frac{1}{2}A_1 \times \sin\Delta\theta$ , and the resonance current signal S2 is $A_1 \times \sin(\omega_0 \times t + \theta_0 + \Delta\theta)$, that is, the target signal amplitude is $A_1$. In this case, the quotient R1 calculated by the controller 30 may be $\frac{1}{2}\sin\Delta\theta$ . Then, if the controller 30 determines that $\frac{1}{2}\sin\Delta\theta$ is greater than the second preset threshold and is less than the first preset threshold, the controller 30 may determine that no foreign object exists in the detection area corresponding to the first resonant network 31. If the controller 30 determines that $\frac{1}{2}\sin\Delta\theta$ is less than or equal to the second preset threshold or is greater than or equal to the first preset threshold, the controller 30 may determine that a foreign object exists in the detection area corresponding to the first resonant network 31.

Herein, the quotient R1 of the amplitude of the phase difference signal S5 and the target signal amplitude is related only to the phase difference between the excitation signal S1 and the resonance current signal S2. Therefore, the controller 30 determines, based on the quotient R1 of the amplitude of the phase difference signal S5 and the target signal amplitude, whether a foreign object exists in the detection area. This can avoid a case that whether a foreign object exists in the detection area cannot be accurately determined directly based on the amplitude of the phase difference signal S5 due to a change of an amplitude of the resonance current signal S2, and can improve detection precision of the foreign object detection apparatus.

In a second optional specific implementation, after determining the target signal amplitude and the amplitude of the phase difference signal S5, the controller 30 may determine a quotient (also denoted as R1 herein) of the amplitude of the phase difference signal S5 and the target signal amplitude. Then, if the controller 30 determines that the target signal amplitude is greater than or equal to a third preset amplitude and determines that the quotient R1 is greater than or equal to a first preset threshold or is less than or equal to a second preset threshold, the controller 30 determines that a foreign object exists in the detection area corresponding to the first resonant network 31. If the controller 30 determines that the target signal amplitude is less than the third preset amplitude or determines that the quotient R1 is greater than the second preset threshold and is less than the first preset threshold, the controller 30 determines that no foreign object exists in the detection area corresponding to the first resonant network 31.

Herein, a value of the amplitude of the phase difference signal S5 is further related to the target signal amplitude of the resonance current signal S2, and a value of the target signal amplitude is further related to a size of an object (the object may be a foreign object, or may be a non-foreign object, for example, a structure such as a vehicle body or a chassis of an electric vehicle) in the detection area. Therefore, in the foregoing implementation, determining is performed based on both the value of the target signal amplitude and a value of the quotient R1. This can avoid a case that a non-foreign object structure (for example, a structure such as a vehicle body or a chassis of an electric vehicle) is recognized as a foreign object, and can improve detection precision of the foreign object detection apparatus.

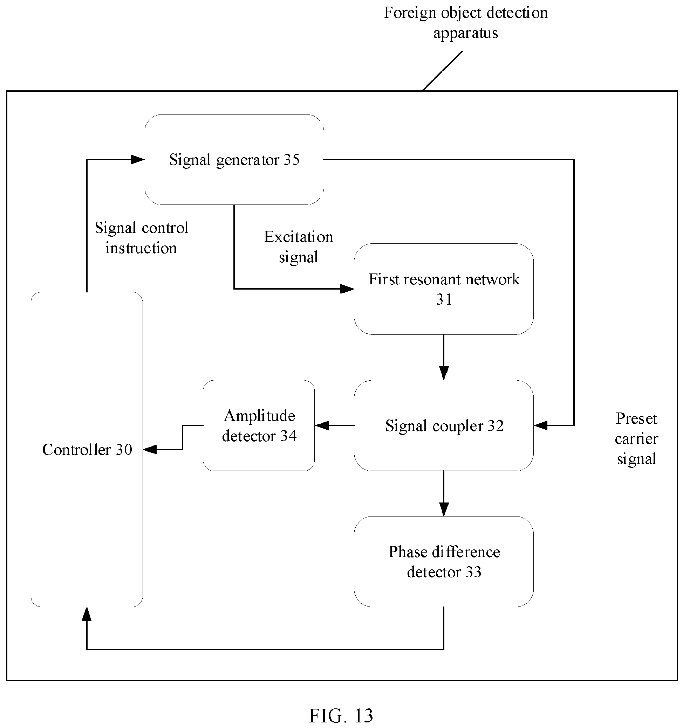

In some optional implementations, FIG. 13 is a schematic diagram of another structure of a foreign object detection apparatus according to an embodiment of this application. As shown in FIG. 13, the foreign object detection apparatus may further include a signal generator 35. The controller 30 is connected to the first resonant network 31 and the signal coupler 32 through the signal generator 35. To be specific, an end of the signal generator 35 is connected to the controller 30, another end of the signal generator 35 is connected to the first resonant network 31, and still another end of the signal generator 35 is connected to an end of the signal coupler 32.

During actual operation, the controller 30 may generate a signal control instruction corresponding to the first resonant network 31, where the signal control instruction may indicate signal frequencies of the excitation signal S1 and the preset carrier signal (herein, it is assumed that the signal frequencies of the excitation signal S1 and the preset carrier signal S3 are f1). Then the controller 30 may send the signal control instruction to the signal generator 35. After receiving the signal control instruction, the signal generator 35 may generate the excitation signal S1 and the preset carrier signal S3 with the frequency f1.

It should be noted that signal waveforms and/or signal amplitudes of the excitation signal S1 and the preset carrier signal S3 may be preconfigured by the signal generator 35, or may be indicated by the controller 30 in real time by using the signal control instruction. This is not limited in this application.

In actual application, the signal generator 35 may be a device or a circuit in any implementation form that is capable of generating signals with different frequencies, different waveforms, or different amplitudes. A specific implementation form of the signal generator 35 is not limited in this application.

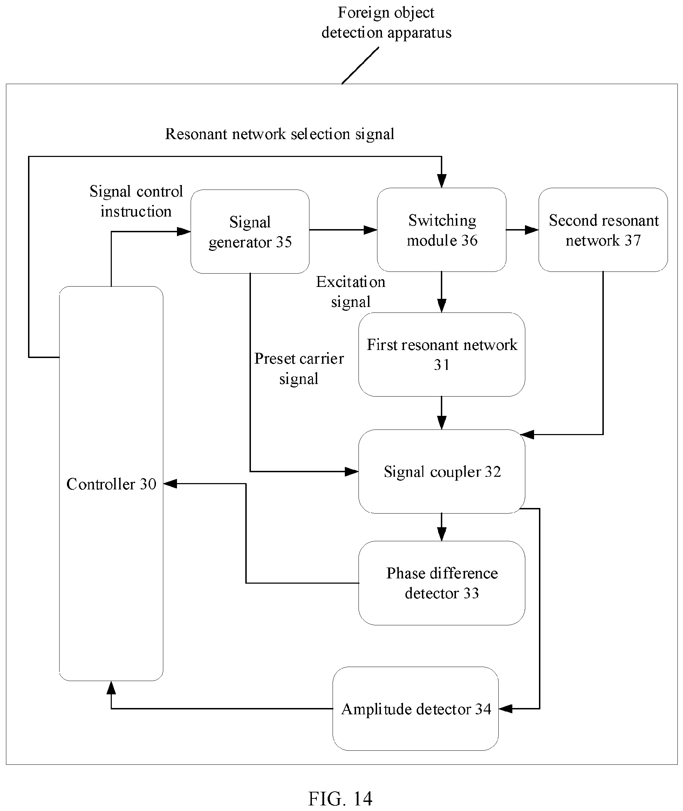

In some optional implementations, FIG. 14 is a schematic diagram of another structure of a foreign object detection apparatus according to an embodiment of this application. As shown in FIG. 14, the foreign object detection apparatus may further include a switching module 36 and a second resonant network 37. The switching module 36 is connected to the controller 30, the signal generator 35, the first resonant network 31, and the second resonant network 37. The switching module 36 may be configured to determine, based on a resonant network selection signal that comes from the controller 30, whether the excitation signal S1 generated by the signal generator 35 is to be transmitted to the first resonant network 31 or the second resonant network 37. In other words, the switching module 36 may be configured to select, based on the resonant network selection signal that comes from the controller 30, the first resonant network 31 or the second resonant network 37 for foreign object detection, so as to detect different detection areas.

Herein, it should be understood that FIG. 14 shows only the first resonant network 31 and the second resonant network 37. However, during actual implementation, the foreign object detection apparatus may further include a resonant network other than the first resonant network 31 and the second resonant network 37, and the switching module 36 may be configured to select different resonant networks based on an indication of the controller 30 for foreign object detection. A connection manner and an operating principle of the resonant network other than the first resonant network 31 and the second resonant network 37 are similar to those of the second resonant network 37. Therefore, to avoid repetition, the structure shown in FIG. 14 is used below as an example for description.

Herein, it should be further noted that the second resonant network 37 and the first resonant network 31 may have identical structures (that is, include same resonant capacitors and coils), but are mounted at different positions (that is, correspond to different detection areas) in the foreign object detection apparatus. Alternatively, the second resonant network 37 and the first resonant network 31 may have different structures (that is, include different resonant capacitors and coils), and are mounted at different positions (that is, correspond to different detection areas) in the foreign object detection apparatus. It can be learned from an operating characteristic of a resonant network that resonance can occur only when a frequency of an excitation signal of the resonant network is the same as a resonance frequency of the resonant network. Therefore, frequencies of excitation signals required by resonant networks with different structures are also different. To be specific, when the second resonant network 37 and the first resonant network 31 have different structures, a frequency of an excitation signal generated by the signal generator 35 for the second resonant network 37 is also different from a frequency of an excitation signal generated by the signal generator 35 for the first resonant network 31. For ease of understanding, a specific scenario in which the second resonant network 37 and the first resonant network 31 have different structures and different mounting positions is used below as an example to describe specific functions of the switching module 36.

During actual operation, the controller 30 may determine whether to perform foreign object detection through the first resonant network 31 or the second resonant network 37. Optionally, the controller 30 may determine, according to a user instruction received by the controller 30, whether to perform foreign object detection through the first resonant network 31 or the second resonant network 37. Alternatively, the controller 30 may determine, based on a preset trigger mechanism of the controller 30, whether to perform foreign object detection through the first resonant network 31 or the second resonant network 32. For example, the trigger mechanism may be : performing foreign object detection through the first resonant network 31 at a moment t1, and performing foreign object detection through the second resonant network 37 at a moment t2. When the controller 30 determines to perform foreign object detection through the first resonant network 31, the controller 30 may generate a signal control instruction (referred to as a first signal control instruction in the following descriptions for ease of differentiation), and send the first signal control instruction to the signal generator 35. The signal generator 35 may generate an excitation signal S1 and a preset carrier signal S3 with a frequency f1 according to the first signal control instruction, send the excitation signal S1 with the frequency f1 to the switching module 36, and send the preset carrier signal S3 with the frequency f1 to the signal coupler 32. In addition, the controller 30 may further generate a resonant network selection signal (referred to as a first resonant network selection signal in the following descriptions for ease of differentiation), and send the first resonant network selection signal to the switching module 36. After receiving the first resonant network selection signal, the switching module 36 may send, to the first resonant network 31, the excitation signal with the frequency f1 that is received by the switching module 36. When the controller 30 determines to perform foreign object detection through the second resonant network 37, the controller 30 may generate a signal control instruction (referred to as a second signal control instruction in the following descriptions for ease of differentiation, where it is assumed herein that a signal frequency indicated by the second signal control instruction is f2), and send the second signal control instruction to the signal generator 35. The signal generator 35 may generate an excitation signal S1 and a preset carrier signal S3 with the frequency f2 according to the second signal control instruction, send the excitation signal S1 with the frequency f2 to the switching module 36, and send the preset carrier signal S3 with the frequency f2 to the signal coupler 32. In addition, the controller 30 may further generate a resonant network selection signal (referred to as a second resonant network selection signal in the following descriptions for ease of differentiation), and send the second resonant network selection signal to the switching module 36. After receiving the second resonant network selection signal, the switching module 36 may send, to the second resonant network 37, the excitation signal with the frequency f2 that is received by the switching module 36.

Herein, it should be noted that the switching module 36 may be a multiplexer switch device or circuit in any implementation form during actual implementation. The switching module 36 may be a discrete switch device, an integrated analog switch chip, or the like. A specific implementation form of the switching module 36 is not limited in this application.

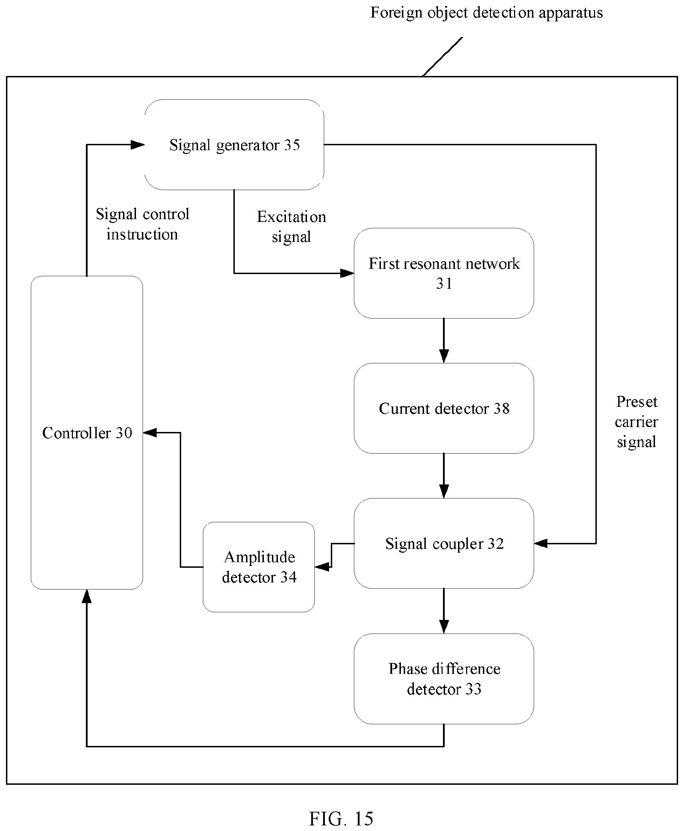

In some optional implementations, FIG. 15 is a schematic diagram of another structure of a foreign object detection apparatus according to an embodiment of this application. As shown in FIG. 15, the foreign object detection apparatus may further include a current detector 38. The first resonant network 31 is connected to the signal coupler 32 through the current detector 38. Herein, it should be noted that the structure shown in FIG. 15 is also applicable to the structure shown in FIG. 14, and the second resonant network 37 and the switching module 36 are not shown herein to simplify description.

During actual operation, when the first resonant network 31 operates normally under the action of the excitation signal S1, the current detector 38 may be configured to detect a current flowing through the first resonant network 31, and perform processing such as amplification on the current to convert the current into the resonance current signal S2.

It should be noted that, during actual implementation, the current detector 38 may be a device or a circuit in any implementation form that is capable of implementing current detection. A specific implementation form of the current detector 38 is not limited in this application.

It should be further noted that preset parameters such as the first preset amplitude, the second preset amplitude, the third preset amplitude, the first preset threshold, and the second preset threshold may be empirical values obtained through a plurality of foreign object detection tests on the foreign object detection apparatus provided in this application.

It should be further noted that the controller 30 may be an apparatus in any implementation form that is capable of performing operation processing and sending a control instruction, for example, a central processing unit (CPU), a digital signal processor (DSP), an application-specific integrated circuit (ASIC), a field-programmable gate array (FPGA) or another programmable logic device, a discrete gate or transistor logic device, or a discrete hardware component. An implementation form of the controller 30 is not limited in this application.

The foreign object detection apparatus provided in this application may directly detect, by using the signal coupler 32 and the phase difference detector 33, the phase difference signal S6 that can indicate the phase difference between the excitation signal S1 input to the first resonant network 31 and the resonance current signal S2 output by the first resonant network 31, and perform, by using the controller 30, simple processing on the phase difference signal S6 to determine whether a foreign object exists in the detection area corresponding to the first resonant network. The foreign object detection apparatus provided in this application directly detects, by using the signal coupler 32 and the phase difference detector 33, the phase difference signal S5 that can indicate the phase difference between the excitation signal S1 and the resonance current signal S2, and provides the phase difference signal S5 for the controller 30 for further simple processing, so as to implement foreign object detection. This reduces overall system complexity and costs compared with a conventional manner in which a controller processes a current parameter or a voltage parameter detected by an analog circuit to obtain a phase angle or a frequency parameter. In addition, the foreign object detection apparatus provided in this application determines, by using the phase difference signal, whether a foreign object exists. This can avoid the following problem in a manner in which foreign object detection is directly performed based on a measured current parameter or voltage parameter: Detection precision is low because the current parameter or the voltage parameter is subject to interference from primary power. Therefore, with the foreign object detection apparatus provided in this application, costs of foreign object detection can be reduced, and precision and reliability of foreign object detection can be improved.

**Embodiment 2**

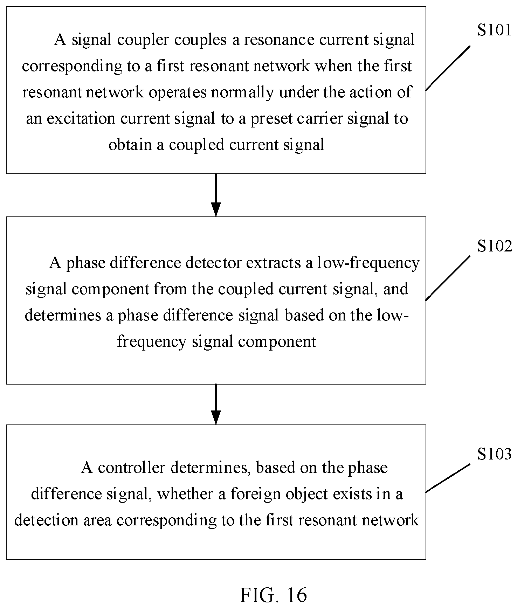

FIG. 16 is a schematic flowchart of a foreign object detection method according to an embodiment of this application. The foreign object detection method is applicable to the foreign object detection apparatus described in Embodiment 1. Herein, a specific structure of the foreign object detection apparatus and a function of each structure are described in Embodiment 1, and signals used during execution of the foreign object detection method are also described in Embodiment 1. As shown in FIG. 16, the method includes the following steps.

S101: A signal coupler couples a resonance current signal corresponding to a first resonant network when the first resonant network operates normally under the action of an excitation signal to a preset carrier signal to obtain a coupled current signal.

In some feasible implementations, after modules in the foreign object detection apparatus are correctly connected and calibrated, a controller 30 may control the excitation signal S1 to be input to the first resonant network 31, so that the first resonant network 31 operates normally under the action of the excitation signal S1. Herein, for a process in which the first resonant network 31 operates normally under the action of the excitation signal S1, refer to the process, described in Embodiment 1, in which the first resonant network 31 operates normally under the action of the excitation signal S1. Details are not described herein again. Then, after receiving a resonance current signal S2 and a preset carrier signal S3 that correspond to the first resonant network 31, the signal coupler 32 may couple the resonance current signal S2 to the preset carrier signal S3 to obtain a coupled current signal S4. Then the signal coupler 32 may transmit the coupled current signal S4 to a phase difference detector 33.

In an optional implementation, the signal coupler 32 includes a first reverser 321 and a signal selector 322. The first reverser 321 may perform 180-degree phase shift on the received resonance current signal S2 to obtain a reverse resonance current signal S6. For a specific process, refer to the process, described in Embodiment 1, in which the first reverser 321 performs 180-degree phase shift on the received resonance current signal S2 to obtain the reverse resonance current signal S6. Details are not described herein again. Then the signal selector 322 may select, based on the preset carrier signal, the resonance current signal S2 or the reverse resonance current signal S6 as the coupled current signal.

Further, the signal selector 322 may include a first switching transistor 3221, a second switching transistor 3222, and a second reverser 3223. During actual operation, in some time periods, the signal selector 322 may control, by using the preset carrier signal S3 flowing through the second reverser 3223, the first switching transistor 3221 to be turned on, and control, by using the preset carrier signal, the second switching transistor 3222 to be turned off, so that the resonance current signal S2 is output as the coupled current signal S4. Alternatively, the signal selector may control, by using the preset carrier signal S3, the second switching transistor 3222 to be turned on, and control, by using the preset carrier signal S3 flowing through the second reverser 3223, the first switching transistor 3221 to be turned off, so that the reverse resonance current signal S6 is output as the coupled current signal. Herein, for specific operating processes of the first switching transistor 3221, the second switching transistor 3222, and the second reverser 3223, refer to corresponding content described in Embodiment 1. Details are not described herein again.

Optionally, in the foregoing implementation, the excitation signal S1 may be a sine signal, the preset carrier signal S3 may be a square wave signal, and a phase difference between the excitation signal S1 and the preset carrier signal S3 is 90 degrees.

In another optional implementation, the signal coupler 32 may include a multiplier/analog multiplication circuit 326. The multiplier/analog multiplication circuit 326 may couple the received resonance current signal S2 to the preset carrier signal S3 to obtain the coupled current signal S4. For a specific process, refer to the process, described in Embodiment 1, in which the multiplier/analog multiplication circuit 326 implements coupling. Details are not described herein again.

Optionally, in the foregoing implementation, both the excitation signal S1 and the preset carrier signal S3 may be sine signals.

S102: The phase difference detector extracts a low-frequency signal component from the coupled current signal, and determines a phase difference signal based on the low-frequency signal component.

In some feasible implementations, the phase difference detector 33 may extract the low-frequency signal component from the coupled current signal S4 output by the signal coupler 32, and then determine the phase difference signal based on the low-frequency signal component. Herein, the low-frequency signal component is a signal component with a frequency less than or equal to a first preset frequency in the coupled current signal S4. Herein, for a specific process of extracting, by the phase difference detector 33, the low-frequency signal component from the coupled current signal S4 output by the signal coupler 32 and determining the phase difference signal based on the low-frequency signal component, refer to the process, described in Embodiment 1, in which the phase difference detector 33 extracts the low-frequency signal component and determines the phase difference signal based on the low-frequency signal component. Details are not described herein again.

S103: The controller determines, based on the phase difference signal, whether a foreign object exists in a detection area corresponding to the first resonant network.

In some feasible implementations, after obtaining the phase difference signal S5, the controller 30 may determine, based on the phase difference signal S5, whether a foreign object exists in the detection area corresponding to the first resonant network 31.

In a first optional implementation, after obtaining the phase difference signal S5, the controller 30 may first determine an amplitude of the phase difference signal S5. Herein, with reference to the foregoing example, the amplitude of the phase difference signal S5 is $\frac{1}{2}A_1 \times \sin \Delta\theta$. Then the controller 30 may determine whether the amplitude of the phase difference signal S5 is less than a first preset amplitude and is greater than a second preset amplitude. If the controller 30 determines that $\frac{1}{2}A_1 \times \sin \Delta\theta$ is less than the first preset amplitude and is greater than the second preset amplitude, the controller 30 may determine that no foreign object exists in the detection area corresponding to the first resonant network 31. If the controller 30 determines that $\frac{1}{2}A_1 \times \sin \Delta\theta$ is greater than or equal to the first preset amplitude or is less than or equal to the second preset amplitude, the controller 30 may determine that a foreign object exists in the detection area corresponding to the first resonant network 31.

In a second optional implementation, the foreign object detection apparatus may further include an amplitude detector 34. The controller 30 may control the amplitude detector 34 to detect a target signal amplitude of the resonance current signal S2. For a specific detection process, refer to corresponding descriptions in Embodiment 1. Details are not described herein again. Then the controller 30 may determine, based on the target signal peak and an amplitude of the phase difference signal S5, whether a foreign object exists in the detection area corresponding to the first resonant network 31.

Optionally, after determining the amplitude of the phase difference signal S5, the controller 30 may calculate a quotient (denoted as R1 herein for ease of description) of the amplitude of the phase difference signal S5 and the target signal amplitude. Then, if the controller 30 determines that the quotient R1 is greater than a second preset threshold and is less than a first preset threshold, the controller 30 may determine that no foreign object exists in the detection area corresponding to the first resonant network 31. If the controller 30 determines that the quotient R1 is less than or equal to the second preset threshold or is greater than or equal to the first preset threshold, the controller 30 may determine that a foreign object exists in the detection area corresponding to the first resonant network 31.

Optionally, after determining the target signal amplitude and the amplitude of the phase difference signal S5, the controller 30 may determine a quotient (also denoted as R1 herein) of the amplitude of the phase difference signal S5 and the target signal amplitude. Then, if the controller 30 determines that the target signal amplitude is greater than or equal to a third preset amplitude and determines that the quotient R1 is greater than or equal to a first preset threshold or is less than or equal to a second preset threshold, the controller 30 determines that a foreign object exists in the detection area corresponding to the first resonant network 31. If the controller 30 determines that the target signal amplitude is less than the third preset amplitude or determines that the quotient R1 is greater than the second preset threshold and is less than the first preset threshold, the controller 30 determines that no foreign object exists in the detection area corresponding to the first resonant network 31.

It should be further noted that, in some optional implementations, the foreign object detection apparatus may further include a signal generator 35, and the controller 30 may control, by using a signal control instruction, the signal generator 35 to generate an excitation signal S1 and a preset carrier signal S3 with a corresponding frequency. The excitation signal S1 and the preset carrier signal S3 may be indicated by the signal control instruction. For a specific process of controlling, by the controller 30 by using the signal control instruction, the signal generator 35 to generate the excitation signal S1 and the preset carrier signal S3 with the corresponding frequency, refer to the process described in Embodiment 1. Details are not described herein again.

In some optional implementations, the foreign object detection apparatus may further include a current detector 38. When the first resonant network 31 operates normally under the action of the excitation signal S1, the current detector 38 may detect a current flowing through the first resonant network 31, and perform processing such as amplification on the current to convert the current into the resonance current signal S2. Herein, for a specific process of detecting the resonance current signal S2 by the current detector 38, refer to corresponding content described in Embodiment 1. Details are not described herein again.

In some optional implementations, the foreign object detection apparatus may further include a switching module 36 and a second resonant network 37. The controller 30 may control, by using a resonant network selection signal, the switching module 36 to select the first resonant network 31 or the second resonant network 37 for foreign object detection, so as to detect different detection areas. Herein, for a specific process of controlling, by the controller 30 by using the resonant network selection signal, the switching module 36 to select the first resonant network 31 or the second resonant network 37 for foreign object detection, refer to the process described in Embodiment 1. Details are not described herein again.

In this embodiment, the signal coupler 32 and the phase difference detector 33 may directly detect the phase difference signal S6 that can indicate the phase difference between the excitation signal S1 input to the first resonant network 31 and the resonance current signal S2 output by the first resonant network 31, and the controller 30 may perform simple processing on the phase difference signal S6 to determine whether a foreign object exists in the detection area corresponding to the first resonant network. In the method, complexity and costs of an entire detection system can be reduced, and the following problem in a manner in which foreign object detection is directly performed based on a measured current parameter or voltage parameter can also be avoided: Detection precision is low because the current parameter or the voltage parameter is subject to interference from primary power.

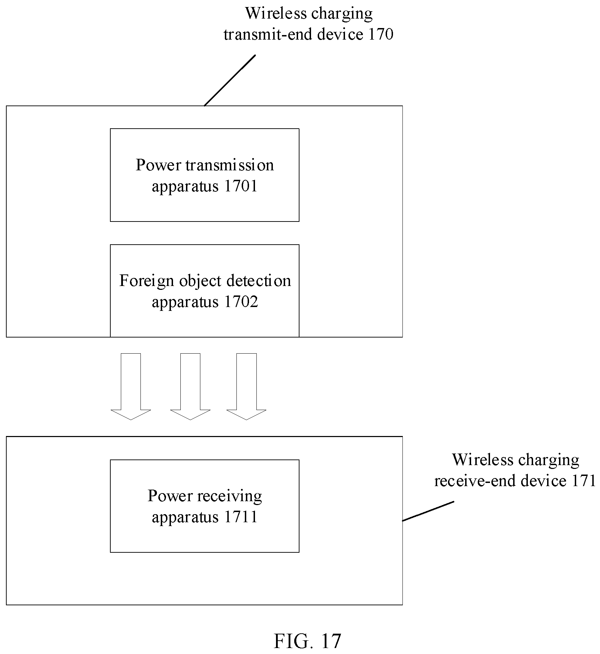

FIG. 17 is a schematic diagram of a structure of another wireless charging system according to an embodiment of this application. As shown in FIG. 17, this application further provides a wireless charging transmit-end device 170. The wireless charging transmit-end device 170 may include a power transmission apparatus 1701 and the foreign object detection apparatus (denoted as 1702 herein) described in Embodiment 1 or Embodiment 2. The wireless charging transmit-end device 170 corresponds to a wireless charging receive-end device 171, and the wireless charging receive-end device 171 may include a power receiving apparatus 1711. The foreign object detection apparatus 1702 may be disposed on a side, facing the power receiving apparatus 1711, of the power transmission apparatus 1701. In a process of charging the wireless charging receive-end device 171 by the wireless charging transmit-end device 170, the foreign object detection apparatus 1702 may be configured to detect whether a foreign object exists between the power receiving apparatus 1711 and the power transmission apparatus 1701. It should be noted that, during actual implementation, the power transmission apparatus 1701 corresponds to the wireless charging transmission apparatus 1010 shown in FIG. 1 and FIG. 2. The power receiving apparatus 1711 corresponds to the wireless charging receiving apparatus 1000 shown in FIG. 1 and FIG. 2. The power transmission apparatus 1701 may include a power transmit coil. The power receiving apparatus 1711 may include a power receive coil. The foreign object detection apparatus 1702 may be disposed on a side, facing the power receive coil, of the power transmit coil.

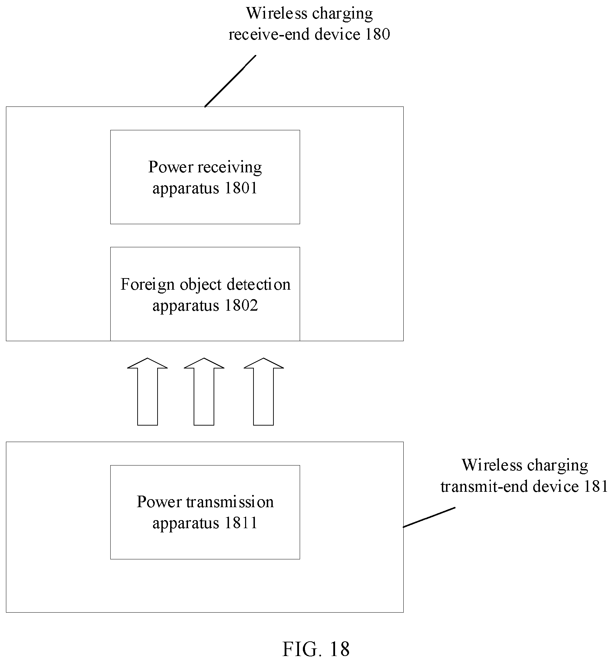

FIG. 18 is a schematic diagram of a structure of another wireless charging system according to an embodiment of this application. As shown in FIG. 18, this application further provides a wireless charging receive-end device 180. The wireless charging receive-end device 180 may include a power receiving apparatus 1801 and the foreign object detection apparatus (denoted as 1802 herein) described in Embodiment 1 or Embodiment 2. The wireless charging receive-end device 180 corresponds to a wireless charging transmit-end device 181, and the wireless charging transmit-end device 181 may include a power transmission apparatus 1811. The foreign object detection apparatus 1802 may be disposed on a side, facing the power transmission apparatus 1811, of the power receiving apparatus 1801. In a process of charging the wireless charging receive-end device 180 by the wireless charging transmit-end device 181, the foreign object detection apparatus 1802 may be configured to detect whether a foreign object exists between the power receiving apparatus 1801 and the power transmission apparatus 1811. It should be noted that, during actual implementation, the power transmission apparatus 1811 corresponds to the wireless charging transmission apparatus 1010 shown in FIG. 1 and FIG. 2. The power receiving apparatus 1801 corresponds to the wireless charging receiving apparatus 1000 shown in FIG. 1 and FIG. 2. The power transmission apparatus 1811 may include a power transmit coil. The power receiving apparatus 1801 may include a power receive coil. The foreign object detection apparatus 1802 may be disposed on a side, facing the power receive coil, of the power transmit coil.

It should be understood that, in the descriptions of this application, "/" indicates "or", unless otherwise specified. For example, A/B may indicate A or B. The term "and/or" in this specification describes only an association relationship between associated objects and indicates that three relationships may exist. For example, A and/or B may represent the following three cases: Only A exists, both A and B exist, and only B exists. In addition, "at least one" means one or more, and "a plurality of" means two or more. The terms such as "first" and "second" do not limit a quantity or an execution sequence, and the terms such as "first" and "second" do not indicate a definite difference.

In the descriptions of this application, the terms such as "example" or "for example" are used to give an example, an illustration, or a description. Any embodiment or design scheme described as an "example" or "for example" in this application should not be construed as being more preferred or more advantageous than another embodiment or design scheme. To be precise, the terms such as "example" or "for example" are intended to present a

A person of ordinary skill in the art may be aware that, in combination with the examples described in embodiments disclosed in this specification, units and algorithm steps can be implemented by electronic hardware, computer software, or a combination thereof. To clearly describe interchangeability between hardware and software, the foregoing generally describes compositions and steps of the examples based on functions. Whether the functions are performed by hardware or software depends on particular applications and design constraints of technical solutions. A person skilled in the art may use different methods to implement the described functions for each particular application, but it should not be considered that the implementation goes beyond the scope of this application.

In embodiments provided in this application, it should be understood that the disclosed systems, apparatuses, and methods may be implemented in other manners. For example, the foregoing apparatuses are merely examples. For example, division into the units is merely logical function division and may be other division during actual implementation. For example, a plurality of units or components may be combined or integrated into another system, or some features may be ignored or not performed. In addition, the shown or discussed mutual couplings, direct couplings, or communication connections may be indirect couplings or communication connections through some interfaces, apparatuses, or units, or may be electrical connections, mechanical connections, or connections in other forms.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

**Claims**

1. A foreign object detection apparatus, wherein the foreign object detection apparatus comprises a controller (30), a first resonant network (31), a signal coupler (32), and a phase difference detector (33);

   the signal coupler is configured to obtain a resonance current signal corresponding to the first resonant network when the first resonant network operates normally under the action of an excitation signal, couple a preset carrier signal to the resonance current signal to obtain a coupled current signal, and transmit the coupled current signal to the phase difference detector, wherein a frequency of the preset carrier signal is the same as a frequency of the excitation signal, and there is a 90-degree phase difference between the preset carrier signal and the excitation signal;
   the phase difference detector is configured to extract a low-frequency signal component from the coupled current signal, determine a phase difference signal based on the low-frequency signal component, and transmit the phase difference signal to the controller, wherein the low-frequency signal component is a signal component with a frequency less than or equal to a first preset frequency in the coupled current signal, and an amplitude of the phase difference signal correspondingly indicates a phase difference between the excitation signal and the resonance current signal; and
   the controller is configured to determine, based on the amplitude of the phase difference signal, whether a foreign object exists in a detection area corresponding to the first resonant network;
   wherein the signal coupler comprises a first reverser (321) and a signal selector (322); the first reverser is configured to perform phase shift on the resonance current signal to obtain a reverse resonance current signal, wherein a phase difference between the reverse resonance current signal and the resonance current signal is 180 degrees; and the signal selector is configured to select, based on a value of a signal amplitude of the preset carrier signal, the resonance current signal or the reverse resonance current signal as the coupled current signal to be output;
   wherein the signal coupler further comprises a multiplier (326) or an analog multiplication circuit (326); and the multiplier or the analog multiplication circuit is configured to multiply the preset carrier signal by the resonance current signal to obtain the coupled current signal.

2. The foreign object detection apparatus according to claim 1, wherein the foreign object detection apparatus comprises a current detector (38); and
   when the first resonant network operates normally under the action of the excitation signal, the current detector is configured to detect a current output by the first resonant network to obtain the resonance current signal, and send the resonance current signal to the signal coupler.

3. The foreign object detection apparatus according to claim 1 or 2, wherein the signal selector comprises a first switching transistor (3221), a second switching transistor (3222), and a second reverser (3223);

   the preset carrier signal is input to a first end of the first switching transistor through the second reverser, the preset carrier signal is also input to a first end of the second switching transistor, the resonance current signal is input to a second end of the first switching transistor, the reverse resonance current signal is input to a second end of the second switching transistor, and a third end of the first switching transistor is connected to a third end of the second switching transistor and serves as an output end of the signal selector; and
   the preset carrier signal is configured to control, through the second reverser, the first switching transistor to be turned on, and is configured to control the second switching transistor to be turned off, so that the resonance current signal is output as the coupled current signal; or
   the preset carrier signal is configured to control the second switching transistor to be turned on, and is configured to control, through the second reverser, the first switching transistor to be turned off, so that the reverse resonance current signal is output as the coupled current signal.

4. The foreign object detection apparatus according to claim 3, wherein the excitation signal is a sine signal, the preset carrier signal is a square wave signal.

5. The foreign object detection apparatus according to any one of claims 1 to 3, wherein the excitation signal and the preset carrier signal are sine signals.

6. The foreign object detection apparatus according to any one of claims 1 to 5, wherein the controller is configured to:

   determine an amplitude of the phase difference signal; and
   if it is determined that the amplitude of the phase difference signal is greater than or equal to a first preset amplitude or is less than or equal to a second preset amplitude, determine that a foreign object exists in the detection area corresponding to the first resonant network, wherein the first preset amplitude is greater than the second preset amplitude; or
   if it is determined that the amplitude of the phase difference signal is less than the first preset amplitude and greater than the second preset amplitude, determine that no foreign object exists in the detection area corresponding to the first resonant network.

7. The foreign object detection apparatus according to any one of claims 1 to 6, wherein the foreign object detection apparatus comprises an amplitude detector (34);

   the amplitude detector is configured to detect a target signal amplitude of the resonance current signal; and
   the controller is configured to determine, based on the target signal amplitude and an amplitude of the phase difference signal, whether a foreign object exists in the detection area corresponding to the first resonant network.

8. The foreign object detection apparatus according to claim 7, wherein the controller is configured to:

   determine an amplitude of the phase difference signal; and
   if it is determined that a quotient of the amplitude of the phase difference signal and the target signal amplitude is greater than or equal to a first preset threshold or is less than or equal to a second preset threshold, determine that a foreign object exists in the detection area corresponding to the first resonant network; or
   if it is determined that a quotient of the amplitude of the phase difference signal and the target signal amplitude is greater than the second preset threshold and less than the first preset threshold, determine that no foreign object exists in the detection area corresponding to the first resonant network.

9. The foreign object detection apparatus according to claim 7, wherein the controller is configured to:

   determine an amplitude of the phase difference signal; and
   if it is determined that the target signal amplitude is greater than or equal to a third preset amplitude, and a quotient of the amplitude of the phase difference signal and the target signal amplitude is greater than or equal to a first preset threshold or is less than or equal to a second preset threshold, determine that a foreign object exists in the detection area corresponding to the first resonant network; or
   if it is determined that the target signal amplitude is less than the third preset amplitude, or it is determined that a quotient of the amplitude of the phase difference signal and the target signal amplitude is greater than the second preset threshold and less than the first preset threshold, determine that no foreign object exists in the detection area corresponding to the first resonant network.

10. The foreign object detection apparatus according to any one of claims 1 to 9, wherein the foreign object detection apparatus comprises a signal generator (35), and the signal generator is configured to:
    generate the preset carrier signal and the excitation signal according to a signal control instruction sent by the controller, wherein frequencies of the preset carrier signal and the excitation signal are indicated by the signal control instruction.

11. The foreign object detection apparatus according to claim 10, wherein the foreign object detection apparatus comprises a second resonant network (37) and a switching module (36), and the second resonant network and the first resonant network are separately connected to the switching module; and
    the switching module is configured to:
    determine, based on a resonant network selection signal that comes from the controller, whether the excitation signal generated by the signal generator is to be transmitted to the first resonant network or the second resonant network.

12. A foreign object detection method, wherein the foreign object detection method is applied to a foreign object detection apparatus, and the foreign object detection apparatus comprises a first resonant network (31), a signal coupler (32), a phase difference detector (33), and a controller (30); and
the method comprises:

coupling, by the signal coupler, a resonance current signal corresponding to the first resonant network when the first resonant network operates normally under the action of an excitation signal to a preset carrier signal to obtain a coupled current signal, wherein a frequency of the preset carrier signal is the same as a frequency of the excitation signal, and there is a 90-degree phase difference between the preset carrier signal and the excitation signal;
extracting, by the phase difference detector, a low-frequency signal component from the coupled current signal, and determining a phase difference signal based on the low-frequency signal component, wherein the low-frequency signal component is a signal component with a frequency less than or equal to a preset frequency in the coupled current signal, and a signal amplitude of the phase difference signal indicates a phase difference between the excitation signal and the resonance current signal; and
determining, by the controller based on the phase difference signal, whether a foreign object exists in a detection area corresponding to the first resonant network;
wherein the signal coupler comprises a first reverser (321) and a signal selector (322); and the coupling, by the signal coupler, a resonance current signal corresponding to the first resonant network when the first resonant network operates normally under the action of an excitation signal to a preset carrier signal to obtain a coupled current signal comprises: performing, by the first reverser, phase shift on the resonance current signal to obtain a reverse resonance current signal, wherein a phase difference between the reverse resonance current signal and the resonance current signal is 180 degrees; and selecting, by the signal selector based on a value of a signal amplitude of the preset carrier signal, the resonance current signal or the reverse resonance current signal as the coupled current signal to be output;
wherein the signal coupler further comprises a multiplier (326) or an analog multiplication circuit (326); and the coupling, by the signal coupler, a resonance current signal corresponding to the first resonant network when the first resonant network operates normally under the action of an excitation signal to a preset carrier signal to obtain a coupled current signal comprises: multiplying, by the multiplier or the analog multiplication circuit, the preset carrier signal by the resonance current signal to obtain the coupled current signal.

13. A wireless charging transmit-end device (170), wherein the wireless charging transmit-end device comprises a power transmission apparatus (1701) and the foreign object detection apparatus (1702) according to any one of claims 1 to 11; and
the foreign object detection apparatus is disposed on a side, facing a wireless charging power receiving apparatus (1711), of the power transmission apparatus, and the power receiving apparatus is comprised in a wireless charging receive-end device corresponding to the wireless charging transmit-end device (171).

**Patentansprüche**

1. Fremdkörperdetektionsvorrichtung, wobei die Fremdkörperdetektionsvorrichtung eine Steuerung (30), ein erstes Resonanznetz (31), einen Signalkoppler (32) und einen Phasendifferenzdetektor (33) umfasst;

der Signalkoppler dazu konfiguriert ist, ein Resonanzstromsignal, das dem ersten Resonanznetz entspricht, wenn das erste Resonanznetz unter der Einwirkung eines Anregungssignals normal arbeitet, zu erlangen, ein voreingestelltes Trägersignal mit dem Resonanzstromsignal zu koppeln, um ein gekoppeltes Stromsignal zu erlangen, und das gekoppelte Stromsignal an den Phasendifferenzdetektor zu senden, wobei eine Frequenz des voreingestellten Trägersignals die gleiche wie eine Frequenz des Anregungssignals ist und es eine Phasendifferenz von 90 Grad zwischen dem voreingestellten Trägersignal und dem Anregungssignal gibt;
der Phasendifferenzdetektor dazu konfiguriert ist, eine niederfrequente Signalkomponente aus dem gekoppelten Stromsignal zu extrahieren, ein Phasendifferenzsignal basierend auf der niederfrequenten Signalkomponente zu bestimmen und das Phasendifferenzsignal an die Steuerung zu senden, wobei die niederfrequente Signalkomponente eine Signalkomponente mit einer Frequenz ist, die kleiner als oder gleich einer ersten voreingestellten Frequenz in dem gekoppelten Stromsignal ist, und eine Amplitude des Phasendifferenzsignals dementsprechend eine Phasendifferenz zwischen dem Anregungssignal und dem Resonanzstromsignal angibt; und
die Steuerung dazu konfiguriert ist, basierend auf der Amplitude des Phasendifferenzsignals zu bestimmen, ob ein Fremdkörper in einem Detektionsbereich vorliegt, der dem ersten Resonanznetz entspricht;
wobei der Signalkoppler einen ersten Umkehrer (321) und einen Signalwähler (322) umfasst; der erste Umkehrer dazu konfiguriert ist, eine Phasenverschiebung an dem Resonanzstromsignal durchzuführen, um ein umgekehrtes Resonanzstromsignal zu erlangen, wobei eine Phasendifferenz zwischen dem umgekehrten Resonanzstromsignal und dem Resonanzstromsignal 180 Grad beträgt; und der Signalwähler dazu konfiguriert ist, basierend auf einem Wert einer Signalamplitude des voreingestellten Trägersignals das Resonanzstromsignal oder das umgekehrte Resonanzstromsignal als das auszugebende gekoppelte Stromsignal auszuwählen;
wobei der Signalkoppler ferner einen Multiplikator (326) oder einen analogen Multiplikationsschaltkreis (326) umfasst; und der Multiplikator oder der analoge Multiplikationsschaltkreis dazu konfiguriert ist, das voreingestellte Trägersignal mit dem Resonanzstromsignal zu multiplizieren, um das gekoppelte Stromsignal zu erlangen.

2. Fremdkörperdetektionsvorrichtung nach Anspruch 1, wobei die Fremdkörperdetektionsvorrichtung einen Stromdetektor (38) umfasst; und

wenn das erste Resonanznetz unter der Einwirkung des Anregungssignals normal arbeitet, der Stromdetektor dazu konfiguriert ist, einen Strom, der durch das erste Resonanznetz ausgegeben wird, zu detektieren, um das Resonanzstromsignal zu erlangen, und das Resonanzstromsignal an den Signalkoppler zu übertragen.

3. Fremdkörperdetektionsvorrichtung nach Anspruch 1 oder 2, wobei der Signalwähler einen ersten Schalttransistor (3221), einen zweiten Schalttransistor (3222) und einen zweiten Umkehrer (3223) umfasst;

das voreingestellte Trägersignal über den zweiten Umkehrer in ein erstes Ende des ersten Schalttransistors eingegeben wird, das voreingestellte Trägersignal ebenfalls in ein erstes Ende des zweiten Schalttransistors eingegeben wird, das Resonanzstromsignal in ein zweites Ende des ersten Schalttransistors eingegeben wird, das umgekehrte Resonanzstromsignal in ein zweites Ende des zweiten Schalttransistors eingegeben wird und ein drittes Ende des ersten Schalttransistors mit einem dritten Ende des zweiten Schalttransistors verbunden ist und als ein Ausgabeende des Signalwählers dient; und
das voreingestellte Trägersignal dazu konfiguriert ist, über den zweiten Umkehrer den ersten Schalttransistor zu steuern, um eingeschaltet zu sein, und dazu konfiguriert ist, den zweiten Schalttransistor zu steuern, um ausgeschaltet zu sein, sodass das Resonanzstromsignal als das gekoppelte Stromsignal ausgegeben wird; oder
das voreingestellte Trägersignal dazu konfiguriert ist, den zweiten Schalttransistor zu steuern, um eingeschaltet zu sein, und dazu konfiguriert ist, über den zweiten Umkehrer den ersten Schalttransistor zu steuern, um ausgeschaltet zu sein, sodass das umgekehrte Resonanzstromsignal als das gekoppelte Stromsignal ausgegeben wird.

4. Fremdkörperdetektionsvorrichtung nach Anspruch 3, wobei das Anregungssignal ein Sinussignal ist und das voreingestellte Trägersignal ein Rechteckwellensignal ist.

5. Fremdkörperdetektionsvorrichtung nach einem der Ansprüche 1 bis 3, wobei das Anregungssignal und das voreingestellte Trägersignal Sinussignale sind.

6. Fremdkörperdetektionsvorrichtung nach einem der Ansprüche 1 bis 5, wobei die Steuerung zu Folgendem konfiguriert ist:

Bestimmen einer Amplitude des Phasendifferenzsignals; und
falls bestimmt wird, dass die Amplitude des Phasendifferenzsignals größer als oder gleich einer ersten voreingestellten Amplitude ist oder kleiner als oder gleich einer zweiten voreingestellten Amplitude ist, Bestimmen, dass ein Fremdkörper in dem Detektionsbereich vorliegt, der dem ersten Resonanznetz entspricht, wobei die erste voreingestellte Amplitude größer als die zweite voreingestellte Amplitude ist; oder
falls bestimmt wird, dass die Amplitude des Phasendifferenzsignals kleiner als die erste voreingestellte Amplitude und größer als die zweite voreingestellte Amplitude ist, Bestimmen, dass kein Fremdkörper in dem Detektionsbereich vorliegt, der dem ersten Resonanznetz entspricht.

7. Fremdkörperdetektionsvorrichtung nach einem der Ansprüche 1 bis 6, wobei die Fremdkörperdetektionsvorrichtung einen Amplitudendetektor (34) umfasst;

der Amplitudendetektor dazu konfiguriert ist, eine Zielsignalamplitude des Resonanzstromsignals zu detektieren; und

die Steuerung dazu konfiguriert ist, basierend auf der Zielsignalamplitude und einer Amplitude des Phasendifferenzsignals zu bestimmen, ob ein Fremdkörper in dem Detektionsbereich vorliegt, der dem ersten Resonanznetz entspricht.

8. Fremdkörperdetektionsvorrichtung nach Anspruch 7, wobei die Steuerung zu Folgendem konfiguriert ist:

Bestimmen einer Amplitude des Phasendifferenzsignals; und
falls bestimmt wird, dass ein Quotient aus der Amplitude des Phasendifferenzsignals und der Zielsignalamplitude größer als oder gleich einem ersten voreingestellten Schwellenwert ist oder kleiner als oder gleich einem zweiten voreingestellten Schwellenwert ist, Bestimmen, dass ein Fremdkörper in dem Detektionsbereich vorliegt, der dem ersten Resonanznetz entspricht; oder
falls bestimmt wird, dass ein Quotient aus der Amplitude des Phasendifferenzsignals und der Zielsignalamplitude größer als der zweite voreingestellte Schwellenwert und kleiner als der erste voreingestellte Schwellenwert ist, Bestimmen, dass kein Fremdkörper in dem Detektionsbereich vorliegt, der dem ersten Resonanznetz entspricht.

9. Fremdkörperdetektionsvorrichtung nach Anspruch 7, wobei die Steuerung zu Folgendem konfiguriert ist:

Bestimmen einer Amplitude des Phasendifferenzsignals; und
falls bestimmt wird, dass die Zielsignalamplitude größer als oder gleich einer dritten voreingestellten Amplitude ist und ein Quotient aus der Amplitude des Phasendifferenzsignals und der Zielsignalamplitude größer als oder gleich einem ersten voreingestellten Schwellenwert ist oder kleiner als oder gleich einem zweiten voreingestellten Schwellenwert ist, Bestimmen, dass ein Fremdkörper in dem Detektionsbereich vorliegt, der dem ersten Resonanznetz entspricht; oder
falls bestimmt wird, dass die Zielsignalamplitude kleiner als die dritte voreingestellte Amplitude ist, oder falls bestimmt wird, dass ein Quotient aus der Amplitude des Phasendifferenzsignals und der Zielsignalamplitude größer als der zweite voreingestellte Schwellenwert und kleiner als der erste voreingestellte Schwellenwert ist, Bestimmen, dass kein Fremdkörper in dem Detektionsbereich vorliegt, der dem ersten Resonanznetz entspricht.

10. Fremdkörperdetektionsvorrichtung nach einem der Ansprüche 1 bis 9, wobei die Fremdkörperdetektionsvorrichtung einen Signalerzeuger (35) umfasst und der Signalerzeuger zu Folgendem konfiguriert ist:
Erzeugen des voreingestellten Trägersignals und des Anregungssignals gemäß einer Signalsteueranweisung, die durch die Steuerung gesendet wird, wobei Frequenzen des voreingestellten Trägersignals und des Anregungssignals durch die Signalsteueranweisung angegeben werden.

11. Fremdkörperdetektionsvorrichtung nach Anspruch 10, wobei die Fremdkörperdetektionsvorrichtung ein zweites Resonanznetz (37) und ein Schaltmodul (36) umfasst und das zweite Resonanznetz und das erste Resonanznetz separat mit dem Schaltmodul verbunden sind; und
das Schaltmodul zu Folgendem konfiguriert ist:
Bestimmen, basierend auf einem Resonanznetzauswahlsignal, das von der Steuerung kommt, ob das Anregungssignal, das durch den Signalerzeuger erzeugt wird, an das erste Resonanznetz oder das zweite Resonanznetz zu senden ist.

12. Fremdkörperdetektionsverfahren, wobei das Fremdkörperdetektionsverfahren auf eine Fremdkörperdetektionsvorrichtung angewandt wird und die Fremdkörperdetektionsvorrichtung ein erstes Resonanznetz (31), einen Signalkoppler (32), einen Phasendifferenzdetektor (33) und eine Steuerung (30) umfasst; und
das Verfahren Folgendes umfasst:

Koppeln, durch den Signalkoppler, eines Resonanzstromsignals, das dem ersten Resonanznetz entspricht, wenn das erste Resonanznetz unter der Einwirkung eines Anregungssignals normal arbeitet, mit einem voreingestellten Trägersignal, um ein gekoppeltes Stromsignal zu erlangen, wobei eine Frequenz des voreingestellten Trägersignals die gleiche wie eine Frequenz des Anregungssignals ist und es eine Phasendifferenz von 90 Grad zwischen dem voreingestellten Trägersignal und dem Anregungssignal gibt;
Extrahieren, durch den Phasendifferenzdetektor, einer niederfrequenten Signalkomponente aus dem gekoppelten Stromsignal und Bestimmen eines Phasendifferenzsignals basierend auf der niederfrequenten Signalkomponente, wobei die niederfrequente Signalkomponente eine Signalkomponente mit einer Frequenz ist, die kleiner als oder gleich einer ersten voreingestellten Frequenz in dem gekoppelten Stromsignal ist, und eine Signalamplitude des Phasendifferenzsignals eine Phasendifferenz zwischen dem Anregungssignal und dem Resonanzstromsignal angibt; und

Bestimmen, durch die Steuerung basierend auf dem Phasendifferenzsignal, ob ein Fremdkörper in einem Detektionsbereich vorliegt, der dem ersten Resonanznetz entspricht;

wobei der Signalkoppler einen ersten Umkehrer (321) und einen Signalwähler (322) umfasst; und das Koppeln, durch den Signalkoppler, eines Resonanzstromsignals, das dem ersten Resonanznetz entspricht, wenn das erste Resonanznetz unter der Einwirkung eines Anregungssignals normal arbeitet, mit einem voreingestellten Trägersignal, um ein gekoppeltes Stromsignal zu erlangen, Folgendes umfasst: Durchführen, durch den ersten Umkehrer, einer Phasenverschiebung an dem Resonanzstromsignal,

um ein umgekehrtes Resonanzstromsignal zu erlangen, wobei eine Phasendifferenz zwischen dem umgekehrten Resonanzstromsignal und dem Resonanzstromsignal 180 Grad beträgt; und Auswählen, durch den Signalwähler basierend auf einem Wert einer Signalamplitude des voreingestellten Trägersignals, des Resonanzstromsignals oder des umgekehrten Resonanzstromsignals als das auszugebende gekoppelte Stromsignal;

wobei der Signalkoppler ferner einen Multiplikator (326) oder einen analogen Multiplikationsschaltkreis (326) umfasst; und das Koppeln, durch den Signalkoppler, eines Resonanzstromsignals, das dem ersten Resonanznetz entspricht, wenn das erste Resonanznetz unter der Einwirkung eines Anregungssignals normal arbeitet, mit einem voreingestellten Trägersignal, um ein gekoppeltes Stromsignal zu erlangen, Folgendes umfasst: Multiplizieren, durch den Multiplikator oder den analogen Multiplikationsschaltkreis, des voreingestellten Trägersignals mit dem Resonanzstromsignal, um das gekoppelte Stromsignal zu erlangen.

13. Drahtlose sendeseitige Ladeeinrichtung (170), wobei die drahtlose sendeseitige Ladeeinrichtung eine Leistungssendevorrichtung (1701) und die Fremdkörperdetektionsvorrichtung (1702) nach einem der Ansprüche 1 bis 11 umfasst; und

die Fremdkörperdetektionsvorrichtung auf einer Seite, die einer drahtlosen Ladeleistungsempfangsvorrichtung (1711) zugewandt ist, der Leistungssendevorrichtung angeordnet ist und die Leistungsempfangsvorrichtung in einer drahtlosen empfangsseitigen Ladeeinrichtung umfasst ist, die der drahtlosen sendeseitigen Ladeeinrichtung (171) entspricht.

## Revendications

1. Appareil de détection d'objets étrangers, dans lequel l'appareil de détection d'objets étrangers comprend un dispositif de commande (30), un premier réseau résonant (31), un coupleur de signal (32), et un détecteur de différence de phase (33) ;

le coupleur de signal est configuré pour obtenir un signal de courant de résonance correspondant au premier réseau résonant lorsque le premier réseau résonant fonctionne normalement sous l'action d'un signal d'excitation, coupler un signal porteur prédéfini au signal de courant de résonance pour obtenir un signal de courant couplé, et émettre le signal de courant couplé au détecteur de différence de phase, dans lequel une fréquence du signal porteur prédéfini est la même qu'une fréquence du signal d'excitation, et il existe une différence de phase de 90 degrés entre le signal porteur prédéfini et le signal d'excitation ;

le détecteur de différence de phase est configuré pour extraire une composante de signal basse fréquence à partir du signal de courant couplé, déterminer un signal de différence de phase sur la base de la composante de signal basse fréquence, et émettre le signal de différence de phase au dispositif de commande, dans lequel la composante de signal basse fréquence est une composante de signal avec une fréquence inférieure ou égale à une première fréquence prédéfinie dans le signal de courant couplé, et une amplitude du signal de différence de phase indique de manière correspondante une différence de phase entre le signal d'excitation et le signal de courant de résonance ; et le dispositif de commande est configuré pour déterminer, sur la base de l'amplitude du signal de différence de phase, si un objet étranger existe dans une zone de détection correspondant au premier réseau résonant ;

dans lequel le coupleur de signal comprend un premier inverseur (321) et un sélecteur de signal (322) ; le premier inverseur est configuré pour réaliser un déphasage sur le signal de courant de résonance pour obtenir un signal de courant de résonance inverse, dans lequel une différence de phase entre le signal de courant de résonance inverse et le signal de courant de résonance est de 180 degrés ; et le sélecteur de signal est configuré pour sélectionner, sur la base d'une valeur d'une amplitude de signal du signal porteur prédéfini, le signal de courant de résonance ou le signal de courant de résonance inverse comme signal de courant couplé à délivrer ;

dans lequel le coupleur de signal comprend également un multiplicateur (326) ou un circuit de multiplication analogique (326) ; et le multiplicateur ou le circuit de multiplication analogique est configuré pour multiplier le signal porteur prédéfini par le signal de courant de résonance pour obtenir le signal de courant couplé.

**2.** Appareil de détection d'objets étrangers selon la revendication 1, dans lequel l'appareil de détection d'objets étrangers comprend un détecteur de courant (38) ; et

lorsque le premier réseau résonant fonctionne normalement sous l'action du signal d'excitation, le détecteur de courant est configuré pour détecter un courant délivré par le premier réseau résonant pour obtenir le signal de courant de résonance, et envoyer le signal de courant de résonance au coupleur de signal.

**3.** Appareil de détection d'objets étrangers selon la revendication 1 ou 2, dans lequel le sélecteur de signal comprend un premier transistor de commutation (3221), un second transistor de commutation (3222), et un second inverseur (3223) ;

le signal porteur prédéfini est entré à une première extrémité du premier transistor de commutation par le biais du second inverseur, le signal porteur prédéfini est également entré à une première extrémité du second transistor de commutation, le signal de courant de résonance est entré à une deuxième extrémité du premier transistor de commutation, le signal de courant de résonance inverse est entré à une deuxième extrémité du second transistor de commutation, et une troisième extrémité du premier transistor de commutation est connectée à une troisième extrémité du second transistor de commutation et sert d'extrémité de sortie du sélecteur de signal ; et
le signal porteur prédéfini est configuré pour commander, par le biais du second inverseur, la mise sous tension du premier transistor de commutation, et est configuré pour commander la mise hors tension du second transistor de commutation, de sorte que le signal de courant de résonance est délivré en tant que signal de courant couplé ; ou
le signal porteur prédéfini est configuré pour commander la mise sous tension du second transistor de commutation, et est configuré pour commander, par le biais du second inverseur, la mise hors tension du premier transistor de commutation, de sorte que le signal de courant de résonance est délivré en tant que signal de courant couplé.

**4.** Appareil de détection d'objets étrangers selon la revendication 3, dans lequel le signal d'excitation est un signal sinusoïdal, le signal porteur prédéfini est un signal d'onde carrée.

**5.** Appareil de détection d'objets étrangers selon l'une quelconque des revendications 1 à 3, dans lequel le signal d'excitation et le signal porteur prédéfini sont des signaux sinusoïdaux.

**6.** Appareil de détection d'objets étrangers selon l'une quelconque des revendications 1 à 5, dans lequel le dispositif de commande est configuré pour :

déterminer une amplitude du signal de différence de phase ; et s'il est déterminé que l'amplitude du signal de différence de phase est supérieure ou égale à une première amplitude prédéfinie ou est inférieure ou égale à une deuxième amplitude prédéfinie, déterminer qu'un objet étranger existe dans la zone de détection correspondant au premier réseau résonant, dans lequel la première amplitude prédéfinie est supérieure à la deuxième amplitude prédéfinie ; ou
s'il est déterminé que l'amplitude du signal de différence de phase est inférieure à la première amplitude prédéfinie et
supérieure à la deuxième amplitude prédéfinie, déterminer qu'aucun objet étranger n'existe dans la zone de détection correspondant au premier réseau résonant.

**7.** Appareil de détection d'objets étrangers selon l'une quelconque des revendications 1 à 6, dans lequel l'appareil de détection d'objets étrangers comprend un détecteur d'amplitude (34) ;

le détecteur d'amplitude est configuré pour détecter une amplitude de signal cible du signal de courant de résonance ; et
le dispositif de commande est configuré pour déterminer, sur la base de l'amplitude du signal cible et d'une amplitude du signal de différence de phase, si un objet étranger existe dans la zone de détection correspondant au premier réseau résonant.

**8.** Appareil de détection d'objets étrangers selon la revendication 7, dans lequel le dispositif de commande est configuré pour :

déterminer une amplitude du signal de différence de phase ; et s'il est déterminé qu'un quotient de l'amplitude du signal de différence de phase et de l'amplitude du signal cible est supérieur ou égal à un premier seuil prédéfini ou est inférieur ou égal à un second seuil prédéfini, déterminer qu'un objet étranger existe dans la zone de détection correspondant au premier réseau résonant ; ou

s'il est déterminé qu'un quotient de l'amplitude du signal de différence de phase et de l'amplitude du signal cible est supérieur au second seuil prédéfini et inférieur au premier seuil prédéfini, déterminer qu'aucun objet étranger n'existe dans la zone de détection correspondant au premier réseau résonant.

9. Appareil de détection d'objets étrangers selon la revendication 7, dans lequel le dispositif de commande est configuré pour :

déterminer une amplitude du signal de différence de phase ; et s'il est déterminé que l'amplitude du signal cible est supérieure ou égale à une troisième amplitude prédéfinie, et qu'un quotient de l'amplitude du signal de différence de phase et de l'amplitude du signal cible est supérieur ou égal à un premier seuil prédéfini ou est inférieur ou égal à un second seuil prédéfini, déterminer qu'un objet étranger existe dans la zone de détection correspondant au premier réseau résonant ; ou s'il est déterminé que l'amplitude du signal cible est inférieure à la troisième amplitude prédéfinie, ou s'il est déterminé qu'un quotient de l'amplitude du signal de différence de phase et de l'amplitude du signal cible est supérieur au second seuil prédéfini et inférieur au premier seuil prédéfini, déterminer qu'aucun objet étranger n'existe dans la zone de détection correspondant au premier réseau résonant.

10. Appareil de détection d'objets étrangers selon l'une quelconque des revendications 1 à 9, dans lequel l'appareil de détection d'objets étrangers comprend un générateur de signaux (35), et le générateur de signaux est configuré pour :

générer le signal porteur prédéfini et le signal d'excitation selon une instruction de commande de signal envoyée par le dispositif de commande, dans lequel des fréquences du signal porteur prédéfini et du signal d'excitation sont indiquées par l'instruction de commande de signal.

11. Appareil de détection d'objets étrangers selon la revendication 10, dans lequel l'appareil de détection d'objets comprend un second réseau résonant (37) et un module de commutation (36), et le second réseau résonant et le premier réseau résonant sont connectés séparément au module de commutation ; et

le module de commutation est configuré pour :

déterminer, sur la base d'un signal de sélection de réseau résonant provenant du dispositif de commande, si le signal d'excitation généré par le générateur de signaux doit être émis au premier réseau résonant ou au second réseau résonant.

12. Procédé de détection d'objets étrangers, dans lequel le procédé de détection d'objets étrangers est appliqué à un appareil de détection d'objets étrangers, et l'appareil de détection d'objets étrangers comprend un premier réseau résonant (31), un coupleur de signal (32), un détecteur de différence de phase (33), et un dispositif de commande (30) ; et

le procédé comprend :

le couplage, par le coupleur de signal, d'un signal de courant de résonance correspondant au premier réseau résonant lorsque le premier réseau résonant fonctionne normalement sous l'action d'un signal d'excitation à un signal porteur prédéfini pour obtenir un signal de courant couplé, dans lequel une fréquence du signal porteur prédéfini est la même qu'une fréquence du signal d'excitation, et il existe une différence de phase de 90 degrés entre le signal porteur prédéfini et le signal d'excitation ;

l'extraction, par le détecteur de différence de phase, d'une composante de signal basse fréquence du signal de courant couplé, et la détermination d'un signal de différence de phase sur la base de la composante de signal basse fréquence, dans lequel la composante de signal basse fréquence est une composante de signal avec une fréquence inférieure ou égale à une fréquence prédéfinie dans le signal de courant couplé, et une amplitude du signal du signal différence de phase indique une différence de phase entre le signal d'excitation et le signal de courant de résonance ; et

le fait de déterminer, par le dispositif de commande sur la base du signal de différence de phase, si un objet étranger existe dans une zone de détection correspondant au premier réseau résonant ;

dans lequel le coupleur de signal comprend un premier inverseur (321) et un sélecteur de signal (322) ; et le couplage, par le coupleur de signal, d'un signal de courant de résonance correspondant au premier réseau résonant lorsque le premier réseau résonant fonctionne normalement sous l'action d'un signal d'excitation à un signal porteur prédéfini pour obtenir un signal de courant couplé comprend : la réalisation, par le premier inverseur, d'un déphasage sur le signal de courant de résonance pour obtenir un signal de courant de résonance inverse, dans lequel une différence de phase entre le signal de courant de résonance inverse et le signal de courant de résonance est de 180 degrés ; et la sélection, par le sélecteur de signal sur la base d'une valeur d'une amplitude de signal du signal porteur prédéfini, du signal de courant de résonance ou du signal de courant de résonance inverse comme signal de courant couplé à délivrer ;

dans lequel le coupleur de signal comprend également un multiplicateur (326) ou un circuit de multiplication analogique (326) ; et le couplage, par le coupleur de signal, d'un signal de courant de résonance correspondant au premier réseau résonant lorsque le premier réseau résonant fonctionne normalement sous l'action d'un signal d'excitation à un signal porteur prédéfini pour obtenir un signal de courant couplé comprend : la multiplication, par le multiplicateur ou le circuit de multiplication analogique, du signal porteur prédéfini par le signal de courant de résonance pour obtenir le signal de courant couplé.

13. Dispositif d'extrémité d'émission de charge sans fil (170), dans lequel le dispositif d'extrémité d'émission de charge sans fil comprend un appareil de transmission de puissance (1701) et l'appareil de détection d'objets étrangers (1702) selon l'une quelconque des revendications 1 à 11 ; et
l'appareil de détection d'objets étrangers est disposé sur un côté, face à un appareil de réception de puissance de charge sans fil (1711), de l'appareil de transmission de puissance, et l'appareil de réception de puissance est compris dans un dispositif d'extrémité de réception de charge sans fil correspondant au dispositif d'extrémité d'émission de charge sans fil (171).

FIG. 1

FIG. 2

Foreign object
detection apparatus

Excitation signal

First resonant
network 31

Controller
30

Signal coupler 32

Preset
carrier
signal

Phase difference
detector 33

FIG. 3

FIG. 4

Foreign object
detection apparatus

Second port 311

Excitation signal —

First resonant
network 31

First port 310

Fourth port 324

Preset
carrier
signal —

First reverser 321

Third port
323

Controller
30

Fifth port
325

Signal selector 322

Signal
coupler 32

Phase difference
detector 33

FIG. 5

FIG. 6

(a)

Coupling

........... Resonance current
signal S2

_ . _ .. Reverse resonance
current signal S6

— — — Preset carrier signal S3

——— Coupled current signal S4

(b)

FIG. 7

(a)

Coupling

(b)

Resonance current
signal S2

Reverse resonance current
signal S6

Preset carrier signal S3

Coupled current signal S4

FIG. 8

FIG. 9

FIG. 10

Foreign object
detection apparatus

Second port 311

Excitation signal

First port 310

First resonant
network 31

Fourth port 324

Preset
carrier
signal

Multiplier/Analog
multiplication
circuit 326

Third port 323

Fifth port
325

Controller
30

Signal coupler 32

Phase difference
detector 33

FIG. 11

Foreign object
detection apparatus

Excitation signal

First resonant network
31

Signal coupler 32 ← Preset carrier signal

Amplitude
detector 34

Phase difference
detector 33

Controller 30

FIG. 12

Foreign object detection apparatus

FIG. 13

Foreign object
detection apparatus

Resonant network selection signal

Signal control
instruction

Signal
generator 35

Switching
module 36

Second resonant
network 37

Excitation
signal

Preset carrier
signal

First resonant network
31

Controller 30

Signal coupler 32

Phase difference
detector 33

Amplitude detector 34

FIG. 14

Foreign object detection apparatus

FIG. 15

A signal coupler couples a resonance current signal corresponding to a first resonant network when the first resonant network operates normally under the action of an excitation current signal to a preset carrier signal to obtain a coupled current signal

S101

A phase difference detector extracts a low-frequency signal component from the coupled current signal, and determines a phase difference signal based on the low-frequency signal component

S102

A controller determines, based on the phase difference signal, whether a foreign object exists in a detection area corresponding to the first resonant network

S103

FIG. 16

Wireless charging
transmit-end device 170

Power transmission
apparatus 1701

Foreign object detection
apparatus 1702

Wireless charging
receive-end device 171

Power receiving
apparatus 1711

FIG. 17

Wireless charging
receive-end device 180

Power receiving
apparatus 1801

Foreign object detection
apparatus 1802

Wireless charging
transmit-end device 181

Power transmission
apparatus 1811

FIG. 18

**EP 4 293 872 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018166928 A1

- CN 109038850 A